# EUROPÄISCHE PATENTSCHRIFT

(11) **EP 3 947 964 B1**
(45) Veröffentlichungstag und Bekanntmachung des Hinweises auf die Patenterteilung: **13.12.2023**
(21) Anmeldenummer: 20716733.9
(22) Anmeldetag: 30.03.2020
(51) Int. Cl.: F03D 17/00

(54) **VERFAHREN UND VORRICHTUNG ZUM ERSTELLEN UND AUSGEBEN EINER ERWARTUNGSLEISTUNG**
METHOD AND DEVICE FOR CREATING AND OUTPUTTING AN EXPECTED OUTPUT
PROCÉDÉ ET DISPOSITIF PERMETTANT D'ÉTABLIR ET DE DISTRIBUER UNE PUISSANCE ESCOMPTÉE

(30) Priorität: 29.03.2019 DE 102019108300
(43) Veröffentlichungstag der Anmeldung: 09.02.2022
(73) Patentinhaber: Wobben Properties GmbH, 26607 Aurich (DE)
(72) Erfinder: LETZEL, Marcus, 28832 Achim (DE); SPÄTH, Stephan, 27755 Delmenhorst (DE); STRUNK, Achim, 41352 Korschenbroich (DE); SCHRÖER, Jan-Bernd, 40239 Düsseldorf (DE); STERN, Robin, 45473 Mülheim an der Ruhr (DE)
(74) Vertreter: Eisenführ Speiser
(86) Internationale Anmeldenummer: PCT/EP2020/058946
(87) Internationale Veröffentlichungsnummer: WO 2020/201209

(56) Entgegenhaltungen:
- DE-A1-102014 112 974
- US-A1- 2008 079 263

## Beschreibung

Die vorliegende Erfindung betrifft eine Vorrichtung sowie ein Verfahren zum Erstellen und Ausgeben einer Erwartungsleistung über eine zu erwartende durch Windenergieanlagen in ein elektrisches Versorgungsnetz einspeisbare Leistung. Eine solche Vorrichtung und ein solches Verfahren erstellen somit eine Leistungsprognose, die zumindest eine Erwartungsleistung wenigstens einer Windenergieanlage umfasst.

Windenergieanlagen sind bekannt, sie erzeugen elektrische Leistung aus Wind. Daraus ergibt sich der Vorteil, dass der Wind als Energieträger kostenfrei zur Verfügung steht, allerdings Schwankungen unterliegt. Heutzutage gibt es viele elektrische Versorgungsnetze, an denen Windenergieanlagen einen signifikanten Anteil, teilweise sogar einen dominanten Anteil aller Energieerzeuger ausmachen. Dadurch haben Schwankungen des Windes und damit des Energieträgers auch Auswirkungen auf die Steuerung des elektrischen Versorgungsnetzes. Besonders die Steuerung eines Leistungs- und/oder Energieflusses kann dadurch beeinflusst werden.

Durch die Variation des Windes kann sich somit eine Variation der durch die Windenergieanlagen erzeugbaren Leistung ergeben, die umso mehr Probleme bereiten kann, umso schlechter oder ungenauer sie bekannt ist.

Es benötigen auch besonders Netzbetreiber, sowohl von Übertragungsnetzen als auch von lokalen Versorgungsnetzen, möglichst gute Leistungsprognosen.

Somit besteht Bedarf, solche Prognosen zu verbessern. Besonders können solche Prognosen durch verbesserte Wettervorhersagen erreicht werden. Dazu gehört, dass Wetterprognosen insgesamt verbessert werden, z. B. durch Verbesserung der meteorologischen Vorhersage. Dass kann durch Verbesserung der entsprechenden Modelle und auch durch Verbesserung der zu Grunde liegenden Wetterdaten erreicht werden. Auch eine Verbesserung der Lokalisierung der Wettervorhersage, nämlich möglichst präzise auf den Ort einer Windenergieanlage oder eines Windparks kann besonders die resultierende Leistungsschätzung des betreffenden Windparks verbessern.

All solche Lösungen führen aber häufig dazu, dass die gesamte Wettervorhersage zwar verbessert wird, für die Leistungsprognose allerdings im Wesentlichen nur Windgeschwindigkeit und Windrichtung von Bedeutung sind. Auch andere Eigenschaften des Windes können eine Rolle spielen, wie Böigkeit des Windes. Schließlich ist aber praktisch nur von Bedeutung, wieviel Leistung die betreffende Windenergieanlage bzw. der betreffende Windpark zu welchem Zeitpunkt erzeugen und in das elektrische Versorgungsnetz einspeisen kann. Besonders solche Leistungsverläufe über die Zeit sind interessant zum Steuern des elektrischen Versorgungsnetzes.

Aber auch die Fokussierung auf die erzeugbare Leistung in Abhängigkeit von einer verbesserten Wetterprognose hat den Nachteil, dass Eigenschaften und Eigenheiten der Windenergieanlagen wenig oder gar nicht in Betracht gezogen werden. Als anschaulichstes Beispiel ist hierzu der Fall zu nennen, dass eine Windenergieanlage aufgrund von Wartungsarbeiten abgeschaltet ist. Dann ändert sich dadurch die verfügbare Leistung in einer Art und Weise, die von der Wetterprognose nicht abgelesen werden kann.

Es kommen aber auch andere Szenarien in Betracht, wie beispielsweise eine Vorschrift, die vorschreibt, dass die Windenergieanlage zu bestimmten Zeiten aus Gründen des Schallschutzes reduziert arbeiten muss. Weiterhin kommen spezielle Parkeffekte in Betracht bei denen beispielsweise die erzeugbare Leistung bei gleicher Windstärke von der Windrichtung abhängt. Üblicherweise ist ein Windpark so geplant, dass Windenergieanlagen in der zu erwartenden Hauptwindrichtung nicht unmittelbar hintereinanderstehen. Tritt nun eine Windrichtung auf, bei der einige oder sogar viele Windenergieanlagen in dem Windpark hintereinander in einer Reihe stehen, so macht sich das regelmäßig in der Leistung, die der Windpark erzeugt, bemerkbar. Der Windpark kann dann nämlich abhängig von der Windrichtung, bei gleicher Windgeschwindigkeit unterschiedlich viel Leistung erzeugen. Auch das ist nur ein weiteres Beispiel.

Grundsätzlich können viele solcher Effekte vorherbestimmt werden, da die Windenergieanlagen natürlich ihre eigene Steuerung kennen. Problematisch ist aber, dass die Windenergieanlagen bzw. Windparks häufig selbst nicht für die übergeordnete Steuerung des elektrischen Versorgungsnetzes oder eines Teils davon verantwortlich sind. Häufig wird die Steuerung des elektrischen Versorgungsnetzes oder eines Abschnitts davon durch einen Netzbetreiber vorgenommen und der Netzbetreiber kennt all diese Verhalten der Windenergieanlagen bzw. Windparks nicht oder nur teilweise. Für den Netzbetreiber ist es grundsätzlich auch zu komplex, all diese Details zu kennen und bei der Auswertung der Wettervorhersage dezidiert zu berücksichtigen.

Das Deutsche Patent- und Markenamt hat in der Prioritätsanmeldung zu vorliegender Anmeldung folgenden Stand der Technik recherchiert: DE 10 2014 112 974 A1; DE 10 2014 118 146 A1; US 2018/0223814 A1 und EP 1 299 779 B1.

Der vorliegenden Erfindung liegt somit die Aufgabe zugrunde, zumindest eines der oben genannten Probleme zu adressieren. Insbesondere soll eine Leistungsprognose verbessert werden, die das Verhalten von Windenergieanlagen möglichst mitberücksichtigt. Insbesondere soll dabei eine Lösung geschaffen werden, die auch durch einen Netzbetreiber anwendbar ist. Zumindest soll zu bisher bekannten Lösungen eine alternative Lösung vorgeschlagen werden.

Erfindungsgemäß wird ein Verfahren nach Anspruch 1 vorgeschlagen. Demnach wird eine Leistungsprognose über zu erwartende, durch Windenergieanlagen in ein elektrisches Versorgungsnetz einspeisbare Leistung erstellt. Dies wird für mehrere Windenergieanlagen durchgeführt, insbesondere für einen oder mehrere Windparks, die jeweils mehrere Windenergieanlagen aufweisen.

Zum Erstellen der Leistungsprognose wird wenigstens ein Anlagenortsmodell verwendet. Das Anlagenortsmodell bildet ein Verhalten wenigstens einer der Windenergieanlagen eines Aufstellungsortes nach. Das Anlagenortsmodell ist dabei dazu ausgebildet, in Abhängigkeit von wenigstens einer Wettervorhersage eine zu erwartende einspeisbare Abgabeleistung der Windenergieanlage zu bestimmen und als Erwartungsleistung auszugeben. Das Anlagenortsmodell erhält also wenigstens die Wettervorhersage als Eingangsinformation oder Eingangsgröße und bestimmt dann die davon abhängig zu erwartende einspeisbare Abgabeleistung der betreffenden Windenergieanlage. Das Anlagenortsmodell kann auch das Verhalten mehrerer Windenergieanlagen beinhalten und bestimmt dann entsprechend die zu erwartende einspeisbare Abgabeleistung dieser mehreren Windenergieanlagen und gibt dies als Erwartungsleistung aus.

Dabei berücksichtigt das Anlagenortsmodell Eigenschaften der Windenergieanlage, bzw. der mehreren Windenergieanlagen und außerdem Eigenschaften des Aufstellungsortes.

Damit kann erreicht werden, dass das konkrete Verhalten der nachgebildeten Windenergieanlage berücksichtigt werden kann. Dieses Vorgehen geht somit weit darüber hinaus, allein die im Wind verfügbare Leistung zu betrachten. Das Verfahren berücksichtigt vielmehr auch das konkrete Anlagenverhalten der betreffenden Windenergieanlage. Dabei wird die einspeisbare Leistung betrachtet, so dass auch etwaige Einflüsse, die das Einspeisen betreffen, wie beispielsweise eine Leistungsbegrenzung des Netzanschlusspunktes, berücksichtigt werden. Besonders können jetzt aber auch verschiedenste Anlagenbegrenzungen berücksichtigt werden, die in der wenigstens einen Windenergieanlage, dessen Verhalten das Anlagenortsmodell nachbildet, auch berücksichtigt werden und insbesondere vorprogrammiert sind.

Dazu gehört beispielsweise eine Tageszeit und gegebenenfalls auch windrichtungsabhängige Abregelung zur Geräuschverminderung, eine Abregelung aufgrund eines Schattenwurfs, der vom Sonnenstand, der Wolkenbildung und gegebenenfalls sogar von der Windrichtung abhängen kann, und eine sektorielle Abregelung oder sektorielle Beeinflussung, bei der die Abgabeleistung abgeregelt und/oder beeinflusst wird, wenn je nach Windrichtung mehrere Windenergieanlagen in einem Windpark unmittelbar hintereinanderstehen. Es kann aber beispielsweise auch eine eisabhängige oder temperaturabhängige Veränderung der Abgabeleistung berücksichtigt werden. Auch Begrenzungen des Netzanschlusspunktes können berücksichtigt werden, wenn beispielsweise der Netzanschlusspunkt auf eine maximale Einspeiseleistung ausgelegt ist, die unter der Summe aller Nennleistungen der Windenergieanlagen liegt, die an diesem Netzanschlusspunkt in das elektrische Versorgungsnetz einspeisen. Das sind nur einige Beispiele.

Darüber hinaus werden auch Eigenschaften des Aufstellungsortes berücksichtigt. Hierzu gehören Topologien des Aufstellungsortes, die Besonderheiten des Geländes berücksichtigen können. Im einfachsten Fall kann dies ein Hindernis, wie ein Berg sein, das je nach Windrichtung ein Hindernis für den Wind darstellt, der dann entsprechend mit geringerer Windgeschwindigkeit auftritt. Die Topologie kann aber auch windrichtungsabhängig zu Düseneffekten führen, die die Windgeschwindigkeit je nach Windrichtung erhöht.

Mitunter bedarf es dafür keiner dezidierten Analyse der Topologie des Aufstellungsortes oder der Besonderheiten des Aufstellungsortes, sondern es kann ausreichend sein, wetterabhängige Verhalten der Windenergieanlagen an dem konkreten Aufstellungsort zu erfassen. Beispielsweise kann erfasst werden, dass eine Windenergieanlage in einer bestimmten Richtung weniger Leistung bei gleicher Windgeschwindigkeit erzeugt, wie bei einer anderen Windrichtung. Solche Werte können aufgenommen und in dem Anlagenortsmodell eingepflegt und berücksichtigt werden.

Ein besonderer Vorteil der Verwendung eines solchen Anlagenortsmodells ist auch, dass das Verhalten der konkreten Windenergieanlage einschließlich Berücksichtigung örtlicher Gegebenheiten nachgebildet werden kann, wobei das Anlagenortsmodell aber an einem ganz anderen Ort, nämlich z. B. bei einem Netzbetreiber, arbeitet. Dadurch kann dieses Anlagenortsmodell den Netzbetreiber in die Lage versetzen, das konkrete Verhalten der wenigstens einen Windenergieanlage zu berücksichtigen, ohne dass der Netzbetreiber, oder ein anderer Anwender, Details oder ein detailliertes Verhalten der Windenergieanlage kennen oder verstehen muss. Besonders vorteilhaft kann es sein, mehrere solcher Anlagenortsmodelle zusammen zu betreiben, um dadurch möglichst flächendeckend die Erwartungsleistungen zu einer gesamten Erwartungsleistung zusammenzuführen. Auch hierzu bedarf es keiner detaillierten Kenntnis der einzelnen Verhaltensweisen der Windenergieanlagen oder der Windparks bzw. auch der Windenergieanlagen untereinander, denn dies berücksichtigen die Anlagenortsmodelle in ihrer Gesamtheit. Dazu geben sie jeweils eine Erwartungsleistung aus und all diese von den Anlagenortsmodellen ausgegebenen Erwartungsleistungen können dann leicht zusammengefügt werden. Erfindungsgemäß ist daher vorgesehen, dass mehrere Anlagenortsmodelle verwendet werden, und in der Erstellungsvorrichtung zusammengefasst werden, um eine Gesamtprognose für die mehreren Windenergieanlagen bzw. mehreren Windparks zu erstellen.

Vorzugsweise wird vorgeschlagen, dass die Erwartungsleistung als zeitlicher Erwartungsleistungsverlauf ausgegeben wird. Die Anlagenortsmodelle erhalten dafür für den betreffenden Zeitraum die entsprechende Wettervorhersage, nämlich für den betreffenden Aufstellungsort, und können davon abhängig unter Berücksichtigung der Eigenschaften der Windenergieanlage und der Eigenschaften des Aufstellungsortes den zeitlichen Erwartungsleistungsverlauf bestimmen und ausgeben.

Insbesondere wird vorgeschlagen, dass die Erwartungsleistung als Erwartungsleistungsverlauf über einen vorbestimmten Vorhersagezeitraum bestimmt und ausgegeben wird, der im Bereich von drei Stunden bis 10 Tagen liegt, der in der Gegenwart beginnen kann. Insbesondere liegt ein solcher Vorhersagezeitraum im Bereich von einem Tag bis fünf Tagen. Entsprechend ist ein solcher Vorhersagezeitraum vergleichsweise lang und in einem solchen Vorhersagezeitraum können auch tageszeitliche Variationen berücksichtigt werden, wie die genannte Reduktion zum Schallschutz und wie die genannte Reduzierung im Falle eines Schattenwurfs.

Vorzugsweise wird zudem vorgeschlagen, dass der zeitliche Erwartungsleistungsverlauf innerhalb vorbestimmbarer Aktualisierungsintervalle aktualisiert wird. Es kann also beispielsweise über viele Stunden ein solcher Erwartungsleistungsverlauf erstellt werden und zu Planungszwecken und Steuerungszwecken verwendet werden. Ändert sich nun die Wettervorhersage, wenn beispielsweise bereits eine der mehreren Stunden abgelaufen ist, so braucht aber nicht abgewartet zu werden, bis der Vorhersagezeitraum abgelaufen ist, sondern der Erwartungsleistungsverlauf kann dann im laufenden Betrieb nachjustiert werden, was hier auch als aktualisiert bezeichnet wird. Auch das kann mittels des wenigstens einen Anlagenortsmodells durchgeführt werden.

Vorzugsweise berücksichtigt das Anlagenortsmodell als Randbedingung eine Tageszeit und/oder eine Jahreszeit. Hier wurde besonders erkannt, das sowohl Tageszeit als auch Jahreszeit für ansonsten scheinbar gleiche Wetterbedingungen zu einem unterschiedlichen Anlagenverhalten führen können. Besonders können Vorschriften existieren, die tageszeitabhängig eine Abregelung vorschreiben, beispielsweise eine Schallreduzierung in der Nacht, die am Tage nicht eingehalten zu werden braucht. Es kommt aber auch in Betracht, dass sich Windenergieanlagen zur Netzstützung tagsüber anders verhalten als nachts, wenn nahegelegene Photovoltaikanlagen keine Leistung in das elektrische Versorgungsnetz einspeisen können.

Die Tageszeit kann aber beispielsweise auch bei einem implementierten Fledermausschutz zu einer abgeregelten Leistung des nachts oder in der Dämmerung führen, während eine solche Reduzierung tagsüber zum Fledermausschutz nicht benötigt wird, da Fledermäuse nicht tagaktiv sind.

Ähnliches gilt auch für die Berücksichtigung der Jahreszeit, denn in Wintermonaten bedarf es keines Fledermausschutzes. Eine Windenergieanlage kann sich aber auch temperaturabhängig unterschiedlich verhalten und auch das kann zumindest teilweise über die Berücksichtigung der Jahreszeit als Randbedingung in dem Anlagenortsmodell berücksichtigt werden.

Gemäß einer Ausführungsform wird vorgeschlagen, dass die Wettervorhersage wenigstens eine vorhergesagte Windgeschwindigkeit und eine vorhergesagte Windrichtung aufweist und beide Größen in das Anlagenortsmodell eingegeben werden. Auch dazu wird vorzugsweise vorgeschlagen, dass die vorhergesagte Windgeschwindigkeit und die vorhergesagte Windrichtung als Windgeschwindigkeitsverlauf bzw. Windrichtungsverlauf über die Zeit in das Anlagenortsmodell eingegeben werden. Das Anlagenortsmodell kann dann daraus entsprechend auch einen Erwartungsleistungsverlauf über die Zeit bestimmen und ausgeben.

Besonders die Windgeschwindigkeit wird benötigt, um erzeugbare und damit einspeisbare Abgabeleistung zu bestimmen. Die Windrichtung ist dabei eine weitere, wichtige Einflussgröße. Aus bereits genannten Gründen einer möglichen sektoriellen Abregelung und/oder sektoriellen Leistungsverringerung, nämlich je nach relativer Aufstellung mehrerer Windenergieanlagen innerhalb eines Windparks zueinander, kann die Windrichtung einen großen Einfluss auf die aus dem Wind erzeugbare Leistung und damit auf die einspeisbare Abgabeleistung haben. Diese beiden Größen können dann auf einfache Art und Weise über das Anlagenortsmodell berücksichtigt werden. Die Windrichtung kann aber auch aus Gründen der Topologie des Aufstellungsortes und/oder des Geländes des Aufstellungsortes die abgebbare Leistung beeinflussen, mitunter signifikant beeinflussen.

Gemäß einer Ausführungsform wird vorgeschlagen, dass das Anlagenortsmodell eine Topologie des Aufstellungsortes nachbildet. Dazu kann die Topologie des Aufstellungsortes vermessen oder anderweitig erfasst werden und dann beispielsweise über ein Finite-Elemente-Modell in das Anlagenortsmodell aufgenommen werden. Es kommt aber auch in Betracht, die Topologie des Aufstellungsortes lediglich hinsichtlich seiner konkreten Auswirkungen auf das Windverhalten zu berücksichtigen. Das kann beispielsweise durch eine längerfristige Vermessung des Aufstellungsortes, besonders des Windverhaltens am Aufstellungsort, mittels eines entsprechenden Messmasts durchgeführt werden, nämlich besonders zum Planungszeitpunkt der Windenergieanlage bzw. des zu errichtenden Windparks. Die weiteren Veränderungen, die sich durch die Aufstellung der Windenergieanlagen ergeben, können entweder mittels Simulationen oder Finite-Elemente-Modelle eingearbeitet werden, oder die Vermessung des Aufstellungsortes wird nach Errichten des Windparks wiederholt oder ergänzt.

Außerdem oder alternativ wird vorgeschlagen, dass das Anlagenortsmodell ortsspezifische Wetterabweichungen des Aufstellungsortes nachbildet. Hierunter fallen besonders windrichtungsabhängige und/oder windgeschwindigkeitsabhängige Abweichungen zwischen einer über den Aufstellungsort hinaus erstellten Wettervorhersage einerseits und einer an den Aufstellungsort angepassten Wettervorhersage andererseits. Hier wurde besonders erkannt, dass übergeordnete großräumige Wettervorhersagen, die hier als Wettervorhersagen über den Aufstellungsort hinaus bezeichnet werden, sich systematisch von lokalen Wettervorhersagen vor Ort unterschieden können. Gibt, um ein einfaches veranschaulichendes Beispiel zu wählen, eine übergeordnete Wettervorhersage eine Windgeschwindigkeit von 6m/s an, so kann beispielsweise die lokale Windgeschwindigkeit in dem Gebiet, für den die Wettervorhersage gilt, im Tal bei 5m/s liegen, wohingegen sie auf einem Berg oder einer Erhebung bei 7m/s liegen kann. Es könnte aber auch umgekehrt sein, wenn sich im Tal ein Düseneffekt ergibt. Und solche Phänomene können auch von der Windrichtung abhängen.

Bei diesem Vorschlag, ortsspezifische Wetterabweichungen aufzunehmen, geht es besonders um die Überlegung, dass aus Erfahrungswerten, also aus einer entsprechenden vorherigen Vermessung des Gebietes, Unterschiede zwischen der übergeordneten und der standortspezifischen Wettervorhersage existieren. Diese Unterschiede und daraus abgeleitete Regelmäßigkeiten, also abgeleitete Zusammenhänge zwischen übergeordneter Wettervorhersage und lokaler Wettervorhersage, können in dem Anlagenortsmodell implementiert werden.

Vorzugsweise ist das Verfahren dadurch gekennzeichnet, dass das Anlagenortsmodell Leistungsverläufe der Windenergieanlage abhängig von Zuständen der Windenergieanlage antizipiert und insbesondere in Abhängigkeit wenigstens eines von der Windenergieanlage erhaltenen Ist-Zustands antizipiert. Insbesondere wird davon abhängig die Erwartungsleistung bestimmt oder verändert, insbesondere ein Verlauf der Erwartungsleistung.

Solche Zustände können insbesondere auch einen Anlagenstatus bzw. eine Statusmeldung, oder mehrere davon, sein oder beinhalten. Hier liegt der Gedanke zu Grunde, dass solche Zustände und/oder Anlagenstatus einen Ist-Zustand der Windenergieanlage bzw. entsprechende Ist-Daten bilden. Dieser Ist-Zustand bzw. diese Ist-Daten liegen somit in der Gegenwart. Dieser Ist-Zustand kann aber eine Ausgangsbasis bilden, um die weitere Entwicklung zu antizipieren.

Davon kann besonders ein Erwartungswert abgeleitet werden, wie sich das Verhalten der Windenergieanlage davon ausgehend entwickelt. Das kann also dann durch das Anlagenortsmodell vorhergesagt werden. Dabei kann sowohl die Sondersituation bzw. der Sondereffekt, den der Anlagenstatus anzeigt, prognostiziert werden, als auch der zu erwartende Verlauf. Daraus lässt sich ein zu erwartender Verlauf der Erwartungsleistung ableiten und damit prognostizieren. Das ist auch ein Vorteil des Anlagenortsmodells, das damit auf diese Informationen zugreifen kann, und daraus den weiteren Verlauf, besonders der Erwartungsleistung, ableiten kann.

Ein Beispiel hierfür ist ein Eisansatz. Die Windenergieanlage kann diesen Eisansatz als Anlagenstatus an sein Anlagenortsmodell übertragen und das Anlagenortsmodell kann davon abhängig auch in die Zukunft schauen und den weiteren Verlauf der Eisansatzsituation prognostizieren, insbesondere wann das Eis abgetaut ist, wie viel Leistung dafür benötigt wird, wann diese Leistung dafür nicht mehr benötigt wird, und wann dann wieder die Windenergieanlage mit nicht oder weniger reduzierter Leistung betrieben werden kann.

Da das Anlagenortsmodell aber auch Wetterdaten erhält, einschließlich Wettervorhersagedaten, kann es damit zusammen das weitere Verhalten der Windenergieanlage, insbesondere den weiteren Verlauf der Erwartungsleistung gut vorhersagen.

Grundlage für solche Vorhersagen sind damit besonders einerseits Zustände der Windenergieanlage, was auch vergangene Zustände beinhalten kann, z.B. wie lange eine bestimmte Situation schon vorliegt, oder nicht mehr vorliegt, und andererseits Wetterinformationen, insbesondere aktuelle Wetterdaten als auch die Wettervorhersage. Es kommt auch in Betracht, dass das aktuelle Wetter vor Ort mit einbezogen wird, besonders insoweit die Windenergieanlage es selbst erfasst hat. Hier kommt auch in Betracht, eine Wetterabweichung und/oder eine Wetteränderung gegenüber einer Vorhersage zu berücksichtigen. All diese Einflussgrößen bzw. Einflussdaten können auch kombiniert betrachtet werden. Besonders ist es vorteilhaft, die Kenntnisse über den Zustand der Windenergieanlage und über das Wetter zu kombinieren.

Solche Anlagenstatus oder Anlagenzustände können eine hohe Relevanz haben, besonders für das Erstellen einer neuen Prognose, oder einer angepassten Prognose, besonders nämlich zum Erstellen eines neuen oder angepassten Verlaufs der Erwartungsleistung. Solche Anlagenstatus bzw. Anlagenmeldungen können auch als Anlagenzustände oder Zustandsinformationen bezeichnet werden und sie können besonders Statusmeldungen, Warnmeldungen und Infomeldungen beinhalten oder diesen entsprechen.

Gemäß einer weiteren Ausgestaltung wird vorgeschlagen, dass das Anlagenortsmodell zeitlich vorbestimmte Leistungsreduzierungen der Windenergieanlage berücksichtigt. Insbesondere wird wenigstens eine Leistungsreduzierung vorgeschlagen, die durch einen der nachfolgend erläuterten zeitlich vorbestimmten Reduzierungsvorgänge ausgelöst wird.

Ein solcher Reduzierungsvorgang ist eine Schallschutzregelung zum Reduzieren einer Schallemission. Beispielsweise können Zeiten vorgegeben sein, zu denen eine solche Schallschutzregelung ausgeführt wird, die nämlich die Abgabeleistung und/oder Drehzahl der betreffenden Windenergieanlage zum Reduzieren der Schallemission reduziert.

Ein weiterer Reduziervorgang, der hier zu berücksichtigen vorgeschlagen wird, ist eine Schattenwurfregelung zum Reduzieren oder Verhindern eines zyklischen Schattenwurfs. Ein solcher Schattenwurf kann störend sein, wenn er beispielsweise besonders im Bereich eines in der Nähe stehenden Wohnhauses auftritt. Ein solcher Schattenwurf hängt besonders vom Sonnenstand und auch vorhandener Wolken ab. Werden Wolken vorhergesagt, ist somit nur mit Streulicht und damit keinem Schattenwurf zu rechnen, sodass hierdurch auch keine Leistungsreduzierung zu erwarten ist. Meist steht ein beispielhaft genanntes Wohnhaus, an dem der Schattenwurf auftritt, vergleichsweise weit weg von der Windenergieanlage, die den Schattenwurf verursacht. Dadurch können schon geringe Änderungen des Sonnenstandes, also kurze Zeiten, dazu führen, dass sich die Situation verändert. Ob ein Schlagschatten an einer störenden Stelle auftritt, kann auch von der Jahreszeit abhängen, also von der Höhe des Sonnenstandes trotz gleicher Tageszeit. Daher kann auch hierfür vorteilhaft sein, die Jahreszeiten mit zu berücksichtigen. Somit kann auch die Schattenwurfregelung, die die Abgabeleistung beeinflusst, durch das vorgeschlagene Anlagenortsmodell berücksichtigt werden.

Ein weiterer vorbestimmter Reduzierungsvorgang, der zur Berücksichtigung vorgeschlagen wird, ist eine Leistungsreduktion auf null zum Ermöglichen einer Anlagenwartung aufgrund eines vorbestimmten Wartungsplans. Aufgrund eines solchen Wartungsplans kann lange vorher bekannt sein, wann die Anlage gewartet wird und entsprechend stillsteht. Das hat natürlich großen Einfluss auf die einspeisbare Abgabeleistung und daher ist es vorteilhaft, das durch das Anlagenortsmodell zu berücksichtigen.

Außerdem oder alternativ wird vorgeschlagen, dass das Anlagenortsmodell von vorbestimmten Randbedingungen abhängige Leistungsreduzierungen der Windenergieanlage berücksichtigt. Insbesondere nämlich solche Leistungsreduzierungen, die ausgelöst werden durch einen von vorbestimmten Randbedingungen abhängigen Reduzierungsvorgang gemäß der nachfolgend beschriebenen Leistungsreduzierungen. Hier geht es also um Reduzierungen, die nicht unmittelbar zeitlich vorbestimmt sind, sondern die sich aus Randbedingungen ergeben. Hierbei kann es aber Überschneidungen zwischen denen geben, die durch Randbedingungen ausgelöst sind und die, die zeitlich vorbestimmt sind.

Ein Beispiel ist eine Leistungsreduzierung aufgrund einer zu erwartenden Fledermausaktivität. Eine solche Fledermausaktivität bzw. die zur Berücksichtigung durchzuführende Leistungsreduzierung kann besonders von einer Temperatur, der Windgeschwindigkeit und der Luftfeuchtigkeit abhängen, also insbesondere ob es regnet oder nicht. Diese Einflussdaten können also als Randbedingungen berücksichtigt werden und darüber kann in dem Anlagenortsmodell erkannt und berücksichtigt werden, ob eine entsprechende Leistungsreduzierung durchgeführt wird oder nicht. Entsprechend beeinflusst das die Bestimmung der Erwartungsleistung.

Eine weitere zur Berücksichtigung vorgeschlagene Leistungsreduzierung in Abhängigkeit von vorbestimmten Randbedingungen ist die Leistungsreduzierung aufgrund einer durchzuführenden Wartung der Windenergieanlage. Wartungen können aufgrund eines Wartungsplans durchgeführt werden, aber auch unvorhergesehen eintreten. Wartungen können auch aufgrund eines Wartungsplanes vorgesehen sein, aber beispielsweise aufgrund eines Sturmes, der einen Aufenthalt von Servicepersonal in der Windenergieanlage aus sicherheitstechnischen Gründen ausschließt, ausgesetzt oder verschoben werden.

Bspw. kann vorgesehen sein, dass Wartungen nur bei Windgeschwindigkeit unterhalb einer als für Wartungen sicher angesehenen Windgeschwindigkeit, z.B. nur unter 10m/s, durchgeführt werden dürfen. Vorzugsweise wird somit berücksichtigt, dass Windenergieanlagen entgegen eines Wartungsplanes nicht gewartet werden, solange die Windgeschwindigkeit oberhalb der als für Wartungen sicher angesehenen Windgeschwindigkeit liegt, wie die beispielhaft genannten 10m/s.

Eine Randbedingung kann auch sein, ob eine andere Windenergieanlage desselben Windparks gerade gewartet wird, denn es darf angenommen werden, dass aufgrund bedingter Kapazitäten von Servicepersonal nur eine Windenergieanlage zurzeit in einem Windpark gewartet wird.

Eine weitere Randbedingung wäre, dass es bspw. in Einzelfällen vertraglich geregelt ist, dass im Falle eines Defekts der Windenergieanlage während der Nacht unmittelbar ein Service-Team ausgeschickt werden muss, aber nur dann, wenn die Anlage bis zu einer vorbestimmten Uhrzeit, z.B. 7 Uhr am nächsten Morgen mehr als eine Mindestenergie, wie bspw. zwei Volllaststunden, produzieren würde.

Dieser Fall kann bspw. berücksichtigt werden, indem Statusmeldungen der Windenergieanlage häufig, und/oder zu vorbestimmten Abständen oder zu vorbestimmten Zeiten abgefragt werden und dann bei betroffenen Anlagen geprüft werden, wie die Produktion bis zum nächsten Morgen voraussichtlich ist. Liegt die Summe unter der Mindestenergie, wird die Windenergieanlage in der Prognose und in der Realität keine Leistung produzieren, weil der Defekt nicht behoben wird. Das kann das Anlagenortsmodell berücksichtigen und ein solches Verhalten auch mit nachbilden.

Ein weiterer möglicher Fall ist die Berücksichtigung von kurzfristigen Blitzmessungen, die vor Ort oder über ein ferngesteuert messendes (remote sensing) Blitzmessnetz erfasst werden können, und der meteorologischen Zugbahnextrapolation von Gewitterzellen für die unmittelbare Zukunft, nämlich von der Gegenwart bis 6 Stunden. Aus Sicherheitsgründen muss eine geplante Wartung bei Gefahr eines Blitzschlages entfallen. Dies kann auch im Anlagenortsmodell berücksichtigt werden.

Eine weitere randbedingungsabhängige Leistungsreduzierung, die zu berücksichtigen vorgeschlagen wird, ist eine aufgrund einer Vorgabe eines Einspeisemanagements. Ein solches Einspeisemanagement betrifft beispielsweise den Fall, dass aufgrund von Vorgaben eine Windenergieanlage beispielsweise nur auf 90 % der möglichen Leistung laufen soll, um die verbleibenden 10 % bei Bedarf verfügbar machen zu können. Ein Einspeisemanagement kann auch eine zu erwartende Veränderung einer Verbrauchsleistung antizipieren, wenn beispielsweise ein großer Verbraucher, wie eine Gießerei, zu einer vorhergesagten oder anderweitig bekannten Zeit an das Netz angeschlossen oder von diesem getrennt wird.

Ist also beispielsweise zu erwarten, dass zu einem bestimmten Zeitpunkt ein großer Verbraucher zugeschaltet wird, kann dies Ereignis antizipierend eine Windenergieanlage bzw. ein Windpark als Vorgabe erhalten, eine entsprechende Vorhalteleistung bereitzustellen, also um die Höhe dieser Vorgabelleistung weniger Leistung zu produzieren.

Ein Einspeisemanagement kann aber auch Lastflüsse im elektrischen Versorgungsnetz steuern und abhängig davon manchen Erzeugern eine Leistungsreduzierung vorgeben. Auch dies kann beispielsweise mit Photovoltaikanlagen zusammenhängen, deren Leistungseinspeisung ebenfalls aufgrund der Wettervorhersage bekannt sein kann, sodass daraus ebenfalls abgeleitet werden kann, wo entsprechende Schwerpunkte einer Leistungseinspeisung durch Photovoltaik zu erwarten sind, die wiederum eine entsprechende Lastflusssteuerung durch das Einspeisemanagement hervorrufen würde, was somit antizipiert und damit im Anlagenortsmodell berücksichtigt werden kann.

Als weitere randbedingungsabhängige Leistungsreduzierung, deren Berücksichtigung im Anlagenortsmodell vorgeschlagen wird, wird eine Leistungsreduzierung aufgrund einer netzspannungsabhängigen und/oder netzfrequenzabhängigen Reduzierungsvorschrift vorgeschlagen. Solche netzspannungsabhängigen und/oder netzfrequenzabhängigen Leistungsreduzierungen sind dem Grunde nach bekannt. Soweit aufgrund des vorhergesagten Wetters und/oder anderer Informationen also eine Frequenzänderung und/oder Spannungsänderung vorhergesagt oder zumindest erwartet werden kann, kann auch die damit einhergehende Leistungsreduzierung antizipiert werden.

Hier kommt auch in Betracht, dass eine Blindleistungsveränderung durchgeführt wird. Das kann eine Erhöhung oder eine Verringerung sein und somit Auswirkungen auf die einspeisbare Wirkleistung haben. Das kann durch das Anlagenortsmodell berücksichtigt werden. Hierbei kann auch die Dauer der Leistungsänderung antizipiert werden, z.B. durch Kenntnis der relevanten Regelvorschriften des elektrischen Versorgungsnetzes, die Zeiten für ein Ausregeln festlegen können, woraus ein zeitlicher Verlauf vorhergesagt werden kann.

All diese Kenntnis wird zur Berücksichtigung im Anlagenortsmodell vorgeschlagen. Hier kommt auch in Betracht, dass solche Frequenz- und/oder Spannungsänderungen aufgrund von Erfahrungswerten antizipiert werden.

Eine weitere randbedingungsabhängige Leistungsreduzierung, zu der eine Berücksichtigung im Anlagenortsmodell vorgeschlagen wird, ist eine aufgrund eines zu erwartenden Eisansatzes. Ein solcher Eisansatz ist abhängig von Umgebungsbedingungen, insbesondere Temperatur, Luftfeuchtigkeit und Windgeschwindigkeit zu erwarten. Somit kann aufgrund der Wettervorhersage eine Annahme getroffen werden, ob ein Eisansatz zu erwarten ist und wie lange dieser andauern wird. Dabei ist besonders zu beachten, dass ein Eisansatz besonders im Bereich von etwa +1 °C bis minimal -10 °C zu erwarten ist. Erfahrungsgemäß tritt bei noch niedrigeren Temperaturen kein Eisansatz auf. Außerdem hängt ein Eisansatz von der Luftfeuchtigkeit ab. Bei besonders trockener Luft ist mit einem Eisansatz nicht zu rechnen oder nur bei sehr engen Temperaturbereichen. Auch die Windgeschwindigkeit spielt eine Rolle, und ein Eisansatz ist eher bei höheren Windgeschwindigkeiten zu erwarten.

Somit kann ein Eisansatz auch abhängig von der Wettervorhersage vorhergesagt werden und abhängig von der Anlagensteuerung kann dann vorherbestimmt werden, wie die Windenergieanlage sich verhalten wird. Auch hier kommen verschiedene Varianten in Betracht.

In einem Fall führt ein Eisansatz zum Abschalten der Windenergieanlage, was entsprechend zu einer Leistungsreduzierung der Windenergieanlage auf null führt. Es kommt aber auch in Betracht, dass die Windenergieanlage, je nach Aufstellungsort, weiterbetrieben werden darf und kann, gegebenenfalls mit reduzierter Leistung. Dafür und auch für den Fall der Abschaltung kommt in Betracht, dass der Eisansatz mittels einer Beheizung der Rotorblätter bekämpft wird. Auch dies wirkt sich auf das Anlagenverhalten aus, weil nämlich zunächst entsprechende Leistung zum Beheizen benötigt wird, danach aber Leistung erzeugt und eingespeist werden kann. Das kann das Anlagenortsmodell berücksichtigen.

Eine weitere randbedingungsabhängige Leistungsreduzierung, zu der vorgeschlagen wird, diese zu berücksichtigen, ist eine in der Windenergieanlage implementierte windgeschwindigkeitsabhängige Sturmregelung, bei der die Abgabeleistung mit zunehmender Windgeschwindigkeit ab einer Sturmanfangswindgeschwindigkeit kontinuierlich reduziert wird. Ein solches Verhalten kann anlagenspezifisch sein und es kann in diesem Bereich ein anlagenspezifischer windgeschwindigkeitsabhängiger Leistungsverlauf vorgesehen sein, und entsprechend ein windgeschwindigkeitsabhängiger Verlauf einer Leistungsreduzierung. Dabei existieren auch Windenergieanlagen, die im Sturmbereich abschalten, ihre Leistung also sofort auf null reduzieren. Solche Windenergieanlagen weisen allerdings häufig eine Hysterese auf, sodass bei nur minimal wieder abfallender Windgeschwindigkeit die Windenergieanlage aber noch nicht wieder eingeschaltet wird, sondern erst bei deutlich geringeren Windgeschwindigkeiten als die Windgeschwindigkeit, bei der die Windenergieanlage aufgrund des Sturmfalls abgeschaltet wurde. All das kann durch das Anlagenortsmodell berücksichtigt werden.

Es kommen aber auch Windenergieanlagen in Betracht, jedenfalls ist es bei modernen Windenergieanlagen so, bei denen die Leistung mit zunehmender Windgeschwindigkeit reduziert wird, wobei einige Anlagen hier die Leistung auf null reduzieren, wohingegen andere Windenergieanlagen nur bis auf eine Minimalleistung reduzieren, die auch bei weiter steigenden Windgeschwindigkeiten weiter eingespeist wird. Auch das kann das Anlagenortsmodell berücksichtigen.

Gemäß einer Ausführungsform wird vorgeschlagen, dass das Anlagenortsmodell ortsabhängige Wetterphänomene berücksichtigt. Insbesondere wird vorgeschlagen, dass eine sonnenstrahlungsabhängige Böenhäufigkeit und/oder nachts auftretende hohe Windgeschwindigkeiten in der Höhe wenigstens eines aerodynamischen Rotors der Windenergieanlagen und/oder die Passage von Schauern und Gewittern, die mit erhöhter Böenhäufigkeit und damit mit einer potenziell modifizierten Leistungsproduktion von Windkraftanlagen verbunden sind, berücksichtigt werden.

Es wurde erkannt, dass es ein Wetterphänomen gibt, bei dem besonders an sogenannten Strahlungstagen, nämlich Tagen, an denen besonders viel Sonnenstrahlung vorhanden ist, stärker Böen auftreten, nämlich, dass solche Böen sowohl in ihrer Intensität stärker sind als auch in ihrer Häufigkeit häufiger auftreten. Abhängig von der Wettervorhersage kann ein solches bekanntes Phänomen vorhergesagt werden. Hierbei ist besonders eine Böenhäufigkeit in der Höhe relevant, in der die aerodynamischen Rotoren der Windenergieanlagen arbeiten, bei modernen Windenergieanlagen derzeit also etwa im Bereich von 50 bis 250 m über dem Erdboden. Hier kann besonders vorhergesehen werden, dass solche erhöhte Böenhäufigkeit auftritt und dass die Abgabeleistung dadurch entsprechend verändert werden kann. Die Abgabeleistung verändert sich dann nämlich im Vergleich zu der ansonsten selben Wetterlage, also insbesondere ansonsten vorhergesagten selben Windgeschwindigkeit und Windrichtung, aber ohne dieses Wetterphänomen der erhöhten Böenhäufigkeit an Strahlungstagen.

Außerdem oder alternativ wird vorgeschlagen, dass das Anlagenortsmodell als ein ortsabhängiges Wetterphänomen nachts auftretende hohe Windgeschwindigkeiten in der Höhe wenigstens eines aerodynamischen Rotors der Windenergieanlage berücksichtigt. Ein solches ortsabhängiges Wetterphänomen wird auch als Low-Level-Jet bezeichnet. Dabei treten solche erhöhten Windgeschwindigkeiten, die hier als Low-Level-Jets bezeichnet werden, besonders auch in der Höhe der aerodynamischen Rotoren der betreffenden Windenergieanlagen auf. Solche Low-Level-Jets treten also weder unmittelbar am Erdboden auf, noch in sehr hoher Höhe, die für Windenergieanlagen nicht relevant ist, wobei dort natürlich außerdem hohe Windgeschwindigkeiten auftreten könnten. Bei diesem Phänomen ist es besonders so, dass hier die Windgeschwindigkeiten in der Höhe der aerodynamischen Rotoren signifikant von numerischen Wetterprognosen abweichen. Dieses Phänomen kann bei ähnlichen Bedingungen wie die Windböen an Strahlungstagen auftreten, allerdings nicht zugleich, sondern nachts bis ca. 1 bis 4 Stunden nach Sonnenaufgang.

Sowohl das Phänomen der sonnenstrahlungsabhängigen Böenhäufigkeit als auch das Phänomen der nachts und/oder morgens auftretenden hohen Windgeschwindigkeiten kann besonders auch durch Vorabmessungen erfasst werden. Solche Vorabmessungen können vor Ort am Aufstellungsort der wenigstens einen Windenergieanlage, dessen Verhalten das Anlagenortsmodell nachbildet, aufgenommen werden, indem die entsprechende Böigkeit bzw. hohen Windgeschwindigkeiten erfasst und der weiteren erfassten Wetterlage gemäß der Wettervorhersage zugeordnet werden. Dadurch kann ein Zusammenhang zwischen den betreffenden Phänomenen und den vorhergesagten Wetterlagen ortsspezifisch erkannt werden.

Die Passage von Schauern und Gewittern, die mit erhöhter Böenhäufigkeit und damit mit einer potenziell modifizierten Leistungsproduktion von Windkraftanlagen verbunden ist, kann durch lokale Messungen oder vorzugsweise durch remote sensing Messungen eines Blitzmessnetzes oder Radarmessungen erfasst und deren Zugbahn extrapoliert werden. Je nach Wetterlage ist eine Extrapolation von der Gegenwart bis ca. 6 Stunden in die Zukunft möglich. Die Auswirkungen der erhöhten Böenhäufigkeit können sowohl eine erhöhte Leistungsproduktion von Windkraftanlagen bedeuten wie auch eine verringerte Produktion, falls durch die Böen eine Sturmabschaltung ausgelöst wird.

Gemäß einer Ausführungsform wird vorgeschlagen, dass das Anlagenortsmodell nicht zu erwartende, außerordentliche Leistungsreduzierungen der Windenergieanlage berücksichtigt, die dem Anlagenortsmodell als außerordentliche Leistungsreduzierungen mitgeteilt werden. Insbesondere betrifft dies Leistungsreduzierungen, die durch wenigstens einen außerordentlichen Reduzierungsvorgang der nachfolgend beschriebenen Reduzierungsvorgänge ausgelöst wird.

Eine solche Leistungsreduzierung ist eine Leistungsreduzierung auf null aufgrund einer technischen Störung der Windenergieanlage. Eine weitere mögliche Leistungsreduzierung ist eine aufgrund eines von extern vorgegebenen Befehls, beispielsweise durch einen Netzbetreiber, oder durch ein Leistungsmanagementsystem. In beiden Fällen wird vorgeschlagen, dass diese Informationen von der tatsächlichen Anlage oder den tatsächlichen Anlagen an das Anlagenortsmodell übermittelt werden oder dass für den zweiten Fall der vorgegebene Befehl auch an das Anlagenortsmodell übermittelt wird. Da eine solche außerordentliche Leistungsreduzierung auch zunächst anhalten kann, weil das aufgrund der technischen Störung so sein muss und/oder weil der vorgegebene Befehl eine länger anhaltende Reduzierung impliziert, können auch diese außerordentlichen Leistungsreduzierungen die Vorhersage beeinflussen, selbst wenn ihr erstes Auftreten und ihre erste Auswirkung auf das Anlagenortsmodell in der Gegenwart stattfindet.

Im Übrigen kann grundsätzlich auch jede der übrigen, vorstehend beschriebenen Leistungsreduktionen, einschließlich der Leistungsreduktionen aufgrund der genannten ortsabhängigen Wetterphänomene, an das Anlagenortsmodell übertragen werden und dadurch Berücksichtigung finden. Auch dann findet gegebenenfalls die Berücksichtigung zunächst in der Gegenwart statt, kann aber die weiter folgende Vorhersage beeinflussen.

Gemäß einer Ausführungsform wird vorgeschlagen, dass das Anlagenortsmodell Leistungsverluste auf Leitungen von der Windenergieanlage zu einem Netzanschlusspunkt, besonders Parkverluste in einem Parknetz, berücksichtigt. Hier wurde erkannt, dass die von der Windenergieanlage erzeugte und abgegebene Leistung zumindest etwas über der in das elektrische Versorgungsnetz eingespeisten Leistung liegen kann, wobei aber die in das elektrische Versorgungsnetz eingespeiste Leistung zur Netzsteuerung relevant ist. Auch dies kann durch das Anlagenortsmodell berücksichtigt werden.

Vorzugsweise wird das Anlagenortsmodell über bereits vorhandene Daten der betreffenden Windenergieanlage, dessen Verhalten es nachbilden soll, eingestellt. Dazu können durch ein SCADA-System aufgenommene Werte der betreffenden Windenergieanlage verwendet werden. Solche Daten können auch als historische Daten bezeichnet werden. Besonders kann das Anlagenortsmodell durch solche Daten angelernt werden. Vorzugsweise erfolgt ein solches Anlernen automatisch, indem aufgenommene Daten, nämlich historische und/oder aktuelle, in das jeweilige Anlagenortsmodell eingegeben werden, um dadurch das Anlagenortsmodell zu erstellen oder anzupassen, also anzulernen. Dabei kann das Verhalten des Anlagenortsmodells mit dem Verhalten der Windenergieanlage verglichen werden und das Anlagenortsmodell entsprechend angepasst werden. Vorzugsweise kommt hier die Verwendung datenbasierter maschineller Lernverfahren in Betracht.

Historische Daten können auch verwendet werden, um übergreifende Verhalten mehrerer Windenergieanlagen zu erfassen und zu implementieren, nämlich in einem Anlagenortsmodell oder in einem übergreifenden, mehrere Anlagenortsmodelle verwendenden System. Das kann zumindest für einen Regelbetrieb vorgesehen sein.

Gemäß einer Ausgestaltung wird vorgeschlagen, dass das Anlagenortsmodell mit Anfangseinstellungen bereitgestellt wird, die aus historischen Daten und/oder anderweitig genommen werden können, und im laufenden Betrieb adaptiert wird, indem jeweils ein durch das Anlagenortsmodell nachgebildetes Verhalten der Windenergieanlage mit einem tatsächlichen Verhalten der Windenergieanlage verglichen wird und abhängig von diesem Vergleich das Anlagenortsmodell angepasst wird.

Im einfachsten Fall können hier Leistungsabweichungen zwischen der eingespeisten Abgabeleistung und der als zu erwartende einspeisbare Abgabeleistung vorhergesagten Erwartungsleistung prozentual berücksichtigt werden. Liegt also die Erwartungsleistung hierbei im Durchschnitt 5 % unter der tatsächlich eingespeisten Abgabeleistung, kann dies als entsprechender Korrekturfaktor berücksichtigt werden. Es kommt aber auch eine dezidiertere Berücksichtigung in Betracht, bei der beispielsweise Abweichungen windgeschwindigkeitsabhängig und/oder windrichtungsabhängig auftreten, um nur zwei Beispiele zu nennen. Dies kann dann entsprechend auch windgeschwindigkeitsabhängig bzw. windrichtungsabhängig berücksichtigt werden. Es kommt aber auch eine weitere dezidierte Betrachtung in Frage, bei der die konkreten Verhalten der tatsächlichen Windenergieanlage mit dem angenommenen Verhalten gemäß dem Anlagenortsmodell verglichen werden und entsprechend diese einzelnen Verhalten angepasst werden.

Wird also beispielsweise erkannt, dass Wartungsarbeiten grundsätzlich 10 % kürzer sind als aufgrund des Wartungsplans zu erwarten, kann das berücksichtigt werden. Treten beispielsweise die Low-Level-Jets häufiger oder mit höherer Stärke auf als aufgrund des Anlagenortsmodells vorhergesagt wurde, so kann auch dies zu den entsprechend parallel aufgenommenen weiteren Daten der Wettervorhersage berücksichtigt werden und die Vorhersage dieser Wetterphänomene entsprechend angepasst werden, um ein weiteres Beispiel zu nennen.

Somit wird insbesondere vorgeschlagen, dass eine als Erwartungsleistung ausgegebene zu erwartende einspeisbare Abgabeleistung der Windenergieanlage mit einer tatsächlich von der Windenergieanlage abgegebenen eingespeisten Abgabeleistung verglichen wird.

Vorzugsweise wird vorgeschlagen, dass das Anlagenortsmodell an einem anderen Ort arbeitet, als an dem, an dem die Windenergieanlage betrieben wird, bzw. wenn die Windenergieanlage in einem Windpark betrieben wird, das Anlagenortsmodell an einem anderen Ort arbeitet als der Windpark betrieben wird. Insbesondere wird vorgeschlagen, dass das Anlagenortsmodell in einer Steuerzentrale eines Netzbetreibers des elektrischen Versorgungsnetzes betrieben wird. Dadurch kann der Netzbetreiber in die Lage versetzt werden, eine anlagenspezifische und ortsspezifische Leistungsvorhersage zu bekommen und gegebenenfalls mit weiteren solchen Vorhersagen zusammenzuführen und das zum Steuern des elektrischen Versorgungsnetzes zu verwenden.

Außerdem oder alternativ wird vorgeschlagen, dass eine Kommunikationsverbindung zwischen der Windenergieanlage und/oder dem Windpark einerseits und dem Anlagenortsmodell, insbesondere der Steuerzentrale andererseits vorgesehen ist. Dazu wird vorgeschlagen, dass darüber Informationen der Windenergieanlage bzw. des Windparks von der Windenergieanlage bzw. dem Windpark übertragen werden, insbesondere Informationen über Abschaltprognosen und lokale Wetterbindungen an der Windenergieanlage bzw. dem Windpark. Diese Informationen werden also zum Anlagenortsmodell übertragen und können dort Berücksichtigung finden. Die Berücksichtigung kann zum einen unmittelbar die Prognose, also besonders den Wert und/oder Verlauf der Erwartungsleistung beeinflussen. Außerdem oder alternativ können die übertragenen Informationen zur Adaption des Anlagenortsmodells verwendet werden.

Gemäß einer Ausführungsform wird vorgeschlagen, dass die Windenergieanlage in einem Windpark mit mehreren Windenergieanlagen betrieben wird und das Anlagenortsmodell eine gegenseitige oder einseitige Beeinflussung wenigstens zweier Windenergieanlagen des Windparks berücksichtigt. Dazu wird besonders vorgeschlagen, dass das Anlagenortsmodell insbesondere eine windrichtungsabhängige Beeinflussung der Windenergieanlage als erste Windenergieanlage durch eine zweite Windenergieanlage berücksichtigt und/oder eine windrichtungsabhängige Vorschrift zur Leistungsreduzierung der ersten Windenergieanlage gegenüber der zweiten Windenergieanlage oder gegenüber einer noch weiteren Windenergieanlage berücksichtigt.

Besonders die letzte Variante, bei der eine windrichtungsabhängige Vorschrift zur Leistungsreduzierung zu berücksichtigen ist, kann auch als sektorielles Abregeln bezeichnet werden. Die erstgenannte windrichtungsabhängige Beeinflussung kann auch als sektoriell bedingte Beeinflussung von Windenergieanlagen bezeichnet werden.

Hier wurde besonders erkannt, dass solche sektoriellen Beeinflussungen oder Abregelungen die einspeisbare Leistung des Windparks bzw. der betreffenden einzelnen Windenergieanlage und damit des Windparks signifikant beeinflussen können und eine Berücksichtigung daher vorzuschlagen ist. Eine solche Berücksichtigung kann durch das Anlagenortsmodell bzw. mehrere Anlagenortsmodelle auf einfache Weise durchgeführt werden. Es kommt auch in Betracht, dass sowohl eine sektorielle Beeinflussung als auch eine sektorielle Abregelung zu berücksichtigen ist und entsprechend beides in einem übergeordneten Anlagenortsmodell bzw. wenigstens zwei Anlagenortsmodellen berücksichtigt wird, in dem Fall also je ein Effekt in einem Anlagenortsmodell. Dreht sich die Windrichtung um 180°, kann sich dann auch die Verteilung dieser Berücksichtigungen umkehren. Es kann aber auch vorkommen, dass die dann bezogen auf die Windrichtung vorne stehende Windenergieanlage keine Abregelungsvorschrift beachten muss. Grundsätzlich können solche Zusammenhänge vergleichsweise komplex sein, jedenfalls, wenn sie in vielen Windenergieanlagen zu berücksichtigen sind. Eine Berücksichtigung in einer Vorhersage, nämlich dem Bestimmen eines Wertes für eine Erwartungsleistung, könnte auch kompliziert sein. Durch die Verwendung des vorgeschlagenen Anlagenortsmodells kann aber eine vergleichsweise einfache Berücksichtigung durchgeführt werden.

Gemäß der Erfindung wird vorgeschlagen, dass für mehrere Windenergieanlagen, insbesondere für einen Windpark mit mehreren Windenergieanlagen, oder für mehrere Windparks, mehrere Anlagenortsmodelle verwendet werden.

Diese werden in der Erstellungsvorrichtung zusammengefasst, um eine Gesamtprognose für die mehreren Windenergieanlagen bzw. mehreren Windparks zu erstellen. Jedes Anlagenortsmodell liefert dadurch genaue Informationen über die einzelne Windenergieanlage und diese Informationen können dann für alle betrachteten Windenergieanlagen zu einem Gesamtbild, nämlich einer Gesamtprognose, zusammengefasst werden.

Erfindungsgemäß wird vorgeschlagen, dass jedes der Anlagenortsmodelle eine vorzugsweise deterministische Erwartungsleistung ausgibt und die Erwartungsleistungen aller Anlagenortsmodelle zusammenaddiert werden, um eine vorzugsweise deterministische Gesamterwartungsleistung (Erwartungswertprognose) für die mehreren Windenergieanlagen zu erhalten. Dadurch kann der Verwender all dieser Anlagenortsmodelle ein umfassendes Bild über die insgesamt von den Windenergieanlagen zu erwartende Abgabeleistung bekommen. Besonders bildet dies eine gute Grundlage, um das elektrische Versorgungsnetz zu steuern, besonders dann, wenn ein Netzbetreiber die Anlagenortsmodelle entsprechend verwendet.

Erfindungsgemäß wird vorgeschlagen, dass jedes der Anlagenortsmodelle eine vorzugsweise probabilistische Erwartungsleistung ausgibt und die Erwartungsleistungen aller Anlagenortsmodelle kombiniert werden, um eine vorzugsweise probabilistische Gesamterwartungsleistung (Wahrscheinlichkeitsprognose, Verteilungsprognose) für die mehreren Windenergieanlagen zu erhalten. Dadurch kann der Verwender all dieser Anlagenortsmodelle ein umfassendes Bild über die insgesamt von den Windenergieanlagen zu erwartende Abgabeleistung und deren Unsicherheit bekommen. Diese Unsicherheit ist i.d.R. ortsabhängig, zeitabhängig und wetterlagenabhängig. Besonders bildet dies eine bessere Grundlage, um das elektrische Versorgungsnetz zu steuern, besonders dann, wenn ein Netzbetreiber technisch und fachlich befähigt ist, die probabilistischen Prognosen entsprechend zu verwenden.

Erfindungsgemäß wird dazu vorgeschlagen, dass für die Gesamterwartungsleistung eine statistische gesamte Genauigkeitsabschätzung vorgenommen wird, wobei die Anlagenortsmodelle jeweils einzelne Genauigkeitsabschätzungen vornehmen und die gesamte Genauigkeitsabschätzung aus den einzelnen Genauigkeitsabschätzungen berechnet wird, z.B. probabilistisch.

Hier liegt die Erkenntnis zugrunde, dass zwar eine möglichst hohe Genauigkeit der Erwartungsleistung bzw. Gesamterwartungsleistung wünschenswert ist, dass aber mit Schwankungen zu rechnen ist. Dennoch können auch solche schwankungsbehafteten Vorhersagen eine gute Grundlage bilden, wenn die zu erwartende Genauigkeit abgeschätzt werden kann. Entsprechend wird das Vornehmen dieser statistischen Gesamtgenauigkeitsabschätzung vorgeschlagen. Eine solche Genauigkeitsabschätzung kann beispielsweise die Angabe einer Standardabweichung sein. Eine solche Standardabweichung kann dadurch bestimmt werden, dass regelmäßig ein Abgleich zwischen vorhergesagter Erwartungsleistung bzw. vorhergesagter Gesamterwartungsleistung und der dann tatsächlich eingespeisten Abgabeleistung durchgeführt wird. Dadurch können die Abweichungen statistisch erfasst und ausgewertet werden. Man kann eine solche Standardabweichung auch probabilistisch aus sogenannten Ensembleprognosen ableiten, die die meteorologische Unsicherheit ortsspezifisch, zeitabhängig und wetterlagenabhängig abbilden. In diesem Fall kann es genügen, eine solche Standardabweichung ausschließlich aus den Ensembleprognosen zu berechnen, d.h. ohne Vergleich mit der tatsächlich eingespeisten Abgabeleistung.

Gemäß einer Ausführungsform wird vorgeschlagen, dass das Anlagenortsmodell eine Kopie einer Steuerung der wenigstens einen Windenergieanlage, dessen Verhalten das Anlagenortsmodell nachbildet, umfasst. Eine solche Steuerung der Windenergieanlage kann aus der Steuerung oder in einer Entwurfsphase aus einer Steuerungssimulation im Idealfall 1:1 extrahiert werden. Dann liegt eine Kopie dieser Steuerung vor und die verhält sich dann grundsätzlich identisch wie die tatsächliche Steuerung. Daher kann eine solche Steuerungskopie eine gute Lösung zur Verwendung in dem Anlagenortsmodell sein. Eine solche Steuerungskopie kann nämlich leicht erstellt werden und gibt dabei das Verhalten der Steuerung und damit der Windenergieanlage gut wieder.

Erfindungsgemäß wird auch eine Erstellungsvorrichtung gemäß Anspruch 12 vorgeschlagen. Eine solche Erstellungsvorrichtung ist zum Erstellen einer Leistungsprognose über zu erwartende durch Windenergieanlagen in ein elektrisches Versorgungsnetz einspeisbare Leistung vorbereitet. Sie umfasst mehrere Anlagenortsmodelle zum Erstellen der Leistungsprognose.

Die Erstellungsvorrichtung umfasst zudem eine Eingabeschnittstelle zum Eingeben wenigstens einer Wettervorhersage, wobei das Anlagenortsmodell dazu vorbereitet ist, in Abhängigkeit der wenigstens einen Wettervorhersage eine zu erwartende einspeisbare Abgabeleistung der Windenergieanlage als Erwartungsleistung zu bestimmen.

Weiterhin ist eine Ausgabeschnittstelle vorgesehen, zum Ausgeben der Erwartungsleistung. Das Anlagenortsmodell kann durch einen Prozessrechner oder als Prozessrechner realisiert sein. Die Eingabeschnittstelle kann als digitaler oder analoger Eingang realisiert sein, über den Daten der Wettervorhersage eingegeben werden können. Es kommt aber auch eine kabellose Variante in Betracht, bei der Daten der Wettervorhersage per Funk eingegeben werden. Dazu könnte eine Antenne vorgesehen sein.

Die Ausgabeschnittstelle kann als digitaler Ausgang oder als analoger Ausgang vorgesehen sein und auch hier kommt eine kabellose Variante in Betracht.

Das Anlagenortsmodell ist dazu vorbereitet, Eigenschaften der Windenergieanlage und Eigenschaften des Aufstellungsortes zu berücksichtigen. Dazu ist insbesondere ein Informationsspeicher vorgesehen, der solche Eigenschaften gespeichert hat, auf die das Anlagenortsmodell zugreifen kann. Ein solcher Informationsspeicher kann somit Teil der Erstellungsvorrichtung sein.

Vorzugsweise ist die Erstellungsvorrichtung dazu vorbereitet, wenigstens eines der vorstehend gemäß wenigstens einer Ausführungsform erläuterten Verfahren auszuführen, entsprechend sind mit der Erstellungsvorrichtung auch die Vorteile erzielbar, die im Zusammenhang mit den Ausführungsformen des Verfahrens erläutert wurden.

Gemäß einer Ausführungsform wird vorgeschlagen, dass die Erstellungsvorrichtung eine Kommunikationsverbindung, oder einen Teil, davon umfasst, um zwischen der Windenergieanlage und/oder einem Windpark einerseits und dem Anlagenortsmodell andererseits Informationen der Windenergieanlage bzw. des Windparks zu übertragen. Insbesondere können Informationen über Abschaltprognosen und lokale Wetterbedingungen an der Windenergieanlage bzw. dem Windpark zur Erstellungsvorrichtung übertragen werden. Dadurch können entsprechende Informationen ausgetauscht werden und darüber kann die Prognose, insbesondere die Erwartungsleistung, verbessert werden und/oder es kann darüber eine Adaption des Anlagenortsmodells durchgeführt werden.

Insoweit die Erstellungsvorrichtung nur einen Teil der Kommunikationseinrichtung umfasst, so kann dies eine Sende- und/oder Empfangseinheit der Kommunikationseinrichtung sein.

Außerdem oder alternativ umfasst das Anlagenortsmodell eine Kopie einer Steuerung der wenigstens einen Windenergieanlage, deren Verhalten es nachbildet. Dadurch kann, wie oben bereits erläutert, auf einfache Art und Weise ein gutes Abbild der Funktionsweise der Steuerung und damit der Funktionsweise der Windenergieanlage geschaffen werden, sodass das Anlagenortsmodell gut dazu vorbereitet ist, die Leistungsprognose zu erstellen.

Erfindungsgemäß wird zudem auch eine Steuerzentrale zum Steuern eines elektrischen Versorgungsnetzes vorgeschlagen, das eine Einstellungsvorrichtung gemäß einer der vorstehend beschriebenen Ausführungsformen aufweist. Damit kann in der Steuerzentrale eine Leistungsprognose gemäß einer dazu entsprechend vorstehend erläuterten Ausführungsform erstellt werden.

Eine solche Steuerzentrale ist dazu vorbereitet, das elektrische Versorgungsnetz zu steuern. Dazu kann sie beispielsweise Leistungsflüsse und/oder das Zu- und Abschalten von Erzeugern steuern, oder die Höhe einzuspeisender Leistung. Um das elektrische Versorgungsnetz möglichst gut steuern zu können, ist eine Informationsgrundlage für die Steuerzentrale wichtig, insbesondere auch eine Information über zu erwartende Leistungen. Das kann durch die Erstellungsvorrichtung zumindest für die zu erwartenden Leistungen der Windenergieanlagen erreicht werden.

Insbesondere kann die Steuerzentrale eine Leitwarte aufweisen, die mit der Erstellungsvorrichtung, insbesondere mit dem Anlagenortsmodell bzw. mit den mehreren Anlagenortsmodellen der Erstellungsvorrichtung verbunden ist. Vorzugsweise ist diese Erstellungsvorrichtung und/oder die Anlagenortsmodelle vor Ort in der Steuerzentrale angeordnet und dort unmittelbar mit der Leitwarte oder einem Teil davon verbunden. Dadurch kann eine hohe Genauigkeit der vorhergesagten Abgabeleistung erreicht werden. Das ist mit oder ohne Verwendung einer Kommunikation zu den einzelnen Windenergieanlagen möglich. Damit ist auch eine hohe Datensicherheit erreichbar, insbesondere eine sogenannte hohe Cyber-Sicherheit erreichbar.

Zwar können auch Kommunikationsverbindungen vorgesehen sein, diese können sich aber auf wenige essenzielle Daten konzentrieren, wodurch eine Datenrate verringert werden kann, was wiederum eine höhere Datensicherheit ermöglicht.

Die Erfindung wird nun nachfolgend anhand von Ausführungsformen unter Bezugnahme auf die begleitenden Figuren beispielhaft näher erläutert.
- Figur 1: zeigt eine Windenergieanlage in einer perspektivischen Darstellung.
- Figur 2: zeigt schematisch einen Windpark, ein elektrisches Versorgungsnetz und eine Steuerzentrale mit einer Erstellungsvorrichtung.

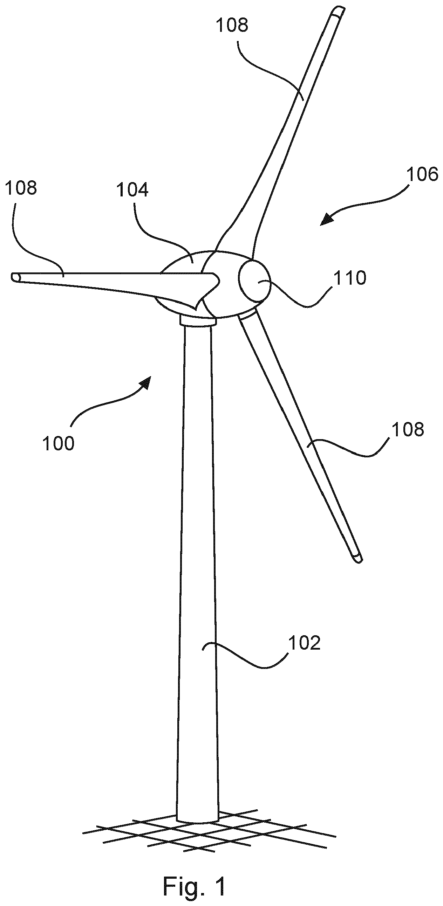

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

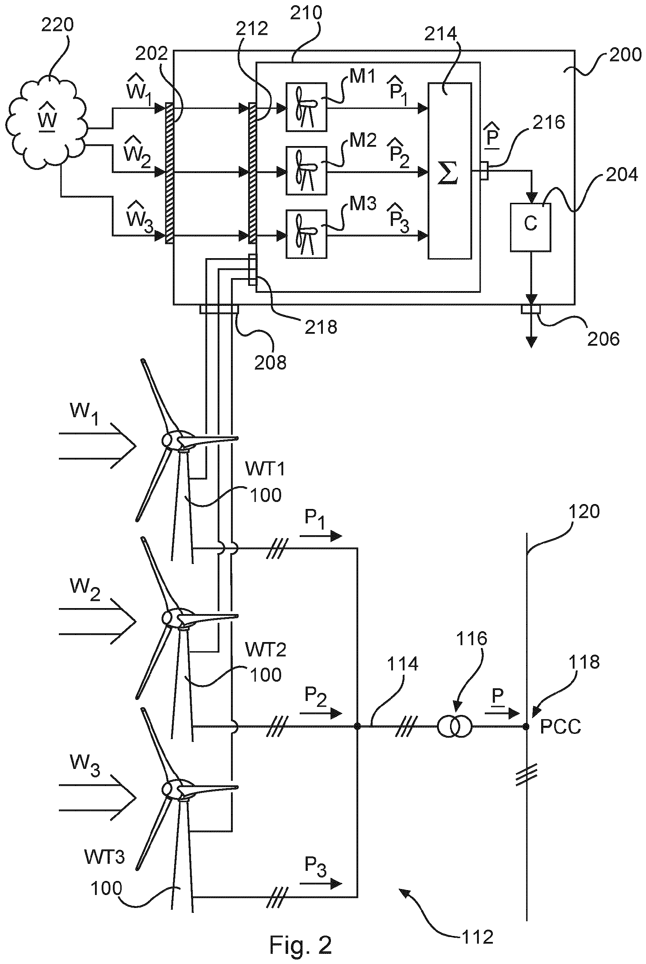

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

In der Figur 2 ist zudem eine Steuerzentrale 200 mit einer Erstellungsvorrichtung 210 eingezeichnet. Die räumliche Nähe zwischen der Steuerzentrale 200 und dem Windpark 112 hat ausschließlich zeichnerische Gründe, um beides zusammen in einer Figur darzustellen. Tatsächlich können die Steuerzentrale 200 und der Windpark 112 um viele Kilometer, wie beispielsweise 50 Kilometer oder 100 Kilometer, auseinanderliegen. Auch die Verwendung von drei Windenergieanlagen 100 ist hier nur exemplarisch. Auch können mehrere Windparks verwendet werden und hier ist nur der Einfachheit halber ein einziger Windpark 112 gezeigt.

Symbolisch erhalten alle drei Windenergieanlagen jeweils Wind, der sich zwischen den Anlagen unterscheiden kann und hier als W1, W2 bzw. W3 angedeutet ist. Alle drei Windenergieanlagen 100 können dieselben Windenergieanlagen sein, sie können sich aber in ihrem Verhalten unterscheiden und daher werden sie hier auch entsprechend zu Erläuterungszwecken in eine erste Windenergieanlage WT1, eine zweite Windenergieanlage WT2 und eine dritte Windenergieanlage WT3 unterteilt. Entsprechend erzeugen sie eine erste Leistung P1, eine zweite Leistung P2 und entsprechend eine dritte Leistung P3. Diese drei Leistungen addieren sich zur Gesamtleistung P. Diese wird dann am gemeinsamen Netzanschlusspunkt 118 in das elektrische Versorgungsnetz 120 eingespeist.

Welche Leistung für diese insgesamt eingespeiste Leistung P zu erwarten ist, soll mittels der Erstellungsvorrichtung 210 bestimmt werden. Die Erstellungsvorrichtung 210 weist dafür für jede der Windenergieanlagen WT1, WT2 und WT3 ein Anlagenortsmodell M1, M2 und M3 auf. Das Anlagenortsmodell M1 bildet somit ein Verhalten der ersten Windenergieanlage WT1 nach. Entsprechend bildet das zweite Anlagenortsmodell M2 ein Verhalten der zweiten Windenergieanlage WT2 nach und das dritte Anlagenortsmodell M3 ein Verhalten der dritten Windenergieanlage WT3.

Dazu erhalten die Anlagenortsmodelle M1, M2 und M3 Informationen einer Wettervorhersage, die von einer Wettervorhersageeinrichtung 220 erstellt wird. Dies Wettervorhersageeinrichtung 220 erstellt dabei eine Gesamtwettervorhersage *Ŵ*, die aufgeteilt werden kann in einzelne lokale Wettervorhersagen *Ŵ*1, *Ŵ*2 und *Ŵ*3*.* Diese einzelnen Wettervorhersagen *Ŵ*1*, Ŵ*2 und *Ŵ*3 sollen jeweils eine Wettervorhersage bilden für die Winde W1, W2 und W3. Hier wird nochmals erwähnt, dass dies der Veranschaulichung dient und die drei Windenergieanlagen WT1, WT2 und WT3 auch weit auseinanderstehen können und auch in unterschiedlichen Windparks stehen können. Stehen sie nämlich zusammen in einem Windpark, wie das nur der Einfachheit halber in Figur 2 gezeigt ist, kommt auch in Betracht, dass sich ihre Wettervorhersagen bzw. Windvorhersagen nicht unterscheiden. Eine Unterscheidung der einzelnen Wettervorhersagen, nämlich in gezielte lokale Wettervorhersagen, ist aber möglich und besonders bei getrennten Standorten sinnvoll, was hier veranschaulicht werden soll.

Jedenfalls werden diese Wettervorhersagen *Ŵ*1*, Ŵ*2 und *Ŵ*3*.* an einer Eingabeschnittstelle 202 der Steuerzentrale 200 in die Steuerzentrale 200 eingegeben. In der Steuerzentrale 200 können dann diese Wettervorhersagen *Ŵ*1*, Ŵ*2 und *Ŵ*3 über eine Eingabeschnittstelle 212 in die Erstellungsvorrichtung 210 eingegeben werden. Es kommt aber auch in Betracht, dass die Steuerzentrale 200 die Wettervorhersagen *Ŵ*1, *Ŵ*2 und *Ŵ*3. vorher noch bearbeitet. Es kommt auch in Betracht, dass die Steuerzentrale 200 eine Gesamtwettervorhersage erhält und diese selbst erst in die einzelnen lokale Wettervorhersagen *Ŵ*1*, Ŵ*2 und *Ŵ*3. unterteilt, oder dass erst die Erstellungsvorrichtung 210 die Gesamtwettervorhersage *Ŵ* auf die einzelnen Anlagenortsmodelle M1, M2 und M3 aufteilt.

Insoweit veranschaulicht Figur 2 eine von mehreren Möglichkeiten. Dabei erhält entsprechend das erste Anlagenmodell M1 die erste Wettervorhersage *Ŵ*1, das zweite Anlagenmodell M2 die zweite Wettervorhersage *Ŵ*2 und das dritte Anlagenmodell M3 die dritte Wettervorhersage *Ŵ*3. Es kommt übrigens auch in Betracht, dass die Wettervorhersagen *Ŵ*1, *Ŵ*2 und *Ŵ*3 nur jeweils Windgeschwindigkeit und Windrichtung enthalten. Es kommt auch in Betracht, dass die Wettervorhersagen *Ŵ*1*, Ŵ*2 und *Ŵ*3 jeweils nur die Windgeschwindigkeit (ohne die Windrichtung) enthalten. Es kommt auch in Betracht, dass sie noch weitere Informationen enthalten, aber nur ein Teil der Information an die Anlagenortsmodelle M1, M2 und M3 weitergegeben werden. Es kommt aber auch in Betracht, dass die Anlagenortsmodelle M1, M2 und M3 jeweils die vollständigen lokalen Wettervorhersagen *Ŵ*1*, Ŵ*2 und *Ŵ*3 erhalten.

Jedenfalls erstellt jedes Anlagenortsmodell M1, M2 und M3 jeweils eine Erwartungsleistung *P̂*1, *P̂*2 und *P̂*3.

Diese drei Erwartungsleistungen *P̂*1, *P̂*2 und *P̂*3 werden dann in dem Summierglied 214 aufaddiert und das Ergebnis ist eine Gesamterwartungsleistung *P̂*. Diese wird dann an der Ausgabeschnittstelle 216 ausgegeben und kann dann in der Steuerzentrale 200 weiterverwendet werden. Dazu kann die Gesamterwartungsleistung *P̂* an eine Steuerwarte 204 gegeben werden, die davon abhängig eine Steuerung des elektrischen Versorgungsnetzes 120 vornehmen kann. Dazu kann die Steuerwarte 204, auch abhängig von weiteren Informationen, was Figur 2 nicht zeigt, entsprechende Steuersignale ausgeben und letztendlich auch über eine Ausgabeschnittstelle 206 der Steuerzentrale 200 zum Steuern des elektrischen Versorgungsnetzes 120 ausgeben.

Um die Güte der Prognose, besonders die Güte der Gesamterwartungsleistung *P̂* weiter zu verbessern, weist die Erstellungsvorrichtung 210 eine Kommunikationsschnittstelle 218 auf, die über eine weitere Kommunikationsschnittstelle 208 der Steuerzentrale 200 eine Kommunikation zu den einzelnen Windenergieanlagen WT1, WT2 und WT3 herstellen kann. Darüber können besonders aktuelle und unvorhergesehene Anlagenereignisse der Erstellungsvorrichtung 210 mitgeteilt werden. Besonders außerordentliche Reduzierungsvorgänge der einzelnen Windenergieanlagen können dadurch der Erstellungsvorrichtung 210 übermittelt werden. Davon abhängig kann die jeweilige Erwartungsleistung *P̂*1*, P̂2* und *P̂*3 und damit im Ergebnis auch die Gesamterwartungsleistung *P̂* angepasst werden. Vorzugsweise erfolgt die Kommunikation, insbesondere die Übertragung von Daten an die Erstellungsvorrichtung, in Echtzeit.

Die Kommunikation kann besonders auch dazu verwendet werden, Statusmeldungen jeder Windenergieanlage jeweils an das zugeordnete Anlagenortsmodell zu übertragen. Aus solchen Statusmeldungen kann das Anlagenortsmodell den Status der Windenergieanlage ablesen, besonders, ob die Windenergieanlage in einem normalen Modus arbeitet, oder eine vom Normalbetrieb abweichende Situation vorliegt. Eine solche abweichende Situation kann das Erkennen eines Eisansatzes sein. Liegt dieser vor und verfügt die Windenergieanlage über eine Blattheizung, kann daraus auch abgeleitet werden, dass die Anlage bald wieder Leistung in voller Höhe produzieren kann, sobald nämlich das Eis durch die Blattheizung abgetaut ist. Somit kann das Anlagenortsmodell mit dieser Statusinformation des Eisansatzes von diesem Zeitpunkt in der Gegenwart aus einen Leistungsverlauf vorausberechnen.

Es ist besonders vorgesehen, dass dafür einzelne Kommunikationsverbindungen zu den einzelnen Anlagenortsmodellen M1, M2 und M3 vorhanden sind, die hier der Einfachheit halber nicht dargestellt sind, zum Zwecke einer besseren Übersichtlichkeit.

Über diese Kommunikationsschnittstelle 218 können der Erstellungsvorrichtung auch tatsächliche Leistungen, die gerade eingespeist werden, mitgeteilt werden, also die aktuellen Werte der ersten, zweiten und dritten Leistung P1, P2 und P3. Die Erstellungsvorrichtung 210 kann dann darauf basierend einen Abgleich zu den Erwartungsleistungen *P̂*1*, P̂*2 und *P̂*3 durchführen und/oder eine Summe bilden und einen Abgleich zur Gesamterwartungsleistung *P̂* herstellen. Dabei kann die Erstellungsvorrichtung 210 auch die jeweiligen Wettervorhersagen *Ŵ*1*, Ŵ*2 und *Ŵ*3 berücksichtigen und dann auch systematische Anpassungen vornehmen, insbesondere eine Adaption des ersten Anlagenortsmodells M1, des zweiten Anlagenortsmodells M2 und des dritten Anlagenortsmodells M3 vornehmen. Wird also beispielsweise bei einer bestimmten Wetterlage immer ein zu geringer Wert der Erwartungsleistung bestimmt, so kann dies systematisch angepasst werden.

Die Erwartungsleistung benötigen besonders die Netzbetreiber, sowohl Übertragungsnetzbetreiber als auch Versorgungsnetzbetreiber. Diese Erwartungsleistung kann dabei auf verschiedenen Aggregierungsniveaus verwendet werden und entsprechend dafür erstellt werden. Das reicht vom Umspannwerk, das sowohl ein Übertragungsnetzbetreiber als auch Versorgungsnetzbetreiber betreiben kann, über das Netzgebiet des betreffenden Netzbetreibers, bis hin zu einem Gebiet, dass das Netz eines gesamten Landes betreffen kann, wie z.B. Deutschland.

Die Prognose, besonders die Erwartungsleistung, wird bevorzugt auf Zeitskalen von jetzt bis mindestens Tag 5 erstellt.

Durch die vorgeschlagene Leistungsprognose können auch Eigentümer und/oder Betreiber von Windenergieanlagen solche Leistungsprognosen auf Parkniveau auf einfache Art und Weise anbieten, besonders, wenn solche Leistungsprognosen bspw. wegen nationaler Vorgaben wie z.B. gridcodes, abgefragt werden.

Es wird auch vorgeschlagen, dass Abschaltprognosen berücksichtigt werden. Das kann ein Einspeisemanagement, Wartungsplanung, Sturm, Fledermaus, Schall, Schatten, Vereisung beinhalten. Auch Kabelverluste können berücksichtigt werden. Sofern Daten einer Windenergieanlage nicht genau bekannt sind, können Daten einer bekannten Windenergieanlage in der Nähe verwendet werden und davon auf die weniger bekannte Windenergieanlage hochgerechnet werden.

Es können alle Prognosen, besonders Abschaltprognosen, einzeln berücksichtigt werden, oder, ganz oder teilweise, als eine einzige Prognose für die Gesamtheit aller Abschalteffekte und/oder anderer Effekte.

Eine statistische Optimierung der Prognosen kann bedarfsabhängig erfolgen. Dafür wird besonders eine separate Optimierung auf den verschiedenen o.g. Aggregierungsniveaus vorgeschlagen.

Besonders wird vorgeschlagen, dass das Anlagenortsmodell je Windenergieanlage und/oder ggf. je Windpark, die verschiedenen Abregelungen und ihre wechselseitigen Vorrangschaltungen wahlweise präzise oder in verschiedenen Näherungen unterschiedlicher Güte und Berechnungsgeschwindigkeiten berücksichtigen. Hierdurch kann das Wissen über das Verhalten vieler Windenergieanlagen verfügbar gemacht werden, nämlich besonders auch für die genannten Abschaltprognosen.

Bisherigen Prognosen sind viele Abregelungen nämlich nicht bekannt. Daher sind solche Prognosen gezwungen, diese ihnen nicht bekannten Abregelungen mehr oder minder grob zu parametrisieren.

## Patentansprüche

1. Verfahren zum Erstellen einer Leistungsprognose über zu erwartende durch Windenergieanlagen in ein elektrisches Versorgungsnetz (120) einspeisbare Leistung (P), wobei
- zum Erstellen der Leistungsprognose wenigstens ein Anlagenortsmodell (M1) verwendet wird und
- das Anlagenortsmodell (M1) ein Verhalten wenigstens einer der Windenergieanlagen eines Aufstellungsortes nachbildet, wobei
- das Anlagenortsmodell (M1) in Abhängigkeit wenigstens einer Wettervorhersage eine zu erwartende einspeisbare Abgabeleistung der Windenergieanlage (100) bestimmt und als Erwartungsleistung ausgibt, und
- das Anlagenortsmodell (M1)
- Eigenschaften der Windenergieanlage (100) und
- Eigenschaften des Aufstellungsortes
berücksichtigt und wobei
- für mehrere Windenergieanlagen, insbesondere für einen Windpark (112) mit mehreren Windenergieanlagen, oder für mehrere Windparks
- mehrere Anlagenortsmodelle (M1, M2, M3) verwendet werden, und in der Erstellungsvorrichtung (210) zusammengefasst werden, um eine Gesamtprognose für die mehreren Windenergieanlagen bzw. mehreren Windparks zu erstellen, und
- jedes der Anlagenortsmodelle (M1, M2, M3) eine Erwartungsleistung (*P̂*1*, P̂*2*, P̂*3) ausgibt, und
- die Erwartungsleistungen (*P̂*1, *P̂*2, *P̂*3) aller Anlagenortsmodelle (M1, M2, M3) zusammenaddiert werden, um eine Gesamterwartungsleistung (*P̂*) für die mehreren Windenergieanlagen zu erhalten, wobei
- für die Gesamterwartungsleistung (*P̂*) eine statistische gesamte Genauigkeitsabschätzung vorgenommen wird und
- die Anlagenortsmodelle (M1, M2, M3) jeweils einzelne Genauigkeitsabschätzungen vornehmen und die gesamte Genauigkeitsabschätzung aus den einzelnen Genauigkeitsabschätzungen berechnet wird.

2. Verfahren nach Anspruch 1, **dadurch gekennzeichnet, dass**
- die Erwartungsleistung als zeitlicher Erwartungsleistungsverlauf ausgegeben wird,
- insbesondere über einen vorbestimmten Vorhersagezeitraum, der im Bereich von 3 Stunden bis 10 Tagen liegt, insbesondere im Bereich von einem Tag bis 5 Tagen, wobei der Vorhersagezeitraum in der Gegenwart beginnen kann und wobei
- der zeitliche Erwartungsleistungsverlauf vorzugsweise innerhalb vorbestimmbarer Aktualisierungsintervalle aktualisiert wird.

3. Verfahren nach Anspruch 1 oder 2, **dadurch gekennzeichnet, dass** das Anlagenortsmodell (M1) wenigstens eine Randbedingung berücksichtigt aus der Liste aufweisend:
- eine Tageszeit, und
- eine Jahreszeit.

4. Verfahren nach einem der vorstehenden Ansprüche, **dadurch gekennzeichnet, dass**
- die Wettervorhersage wenigstens eine vorhergesagte Windgeschwindigkeit und eine vorhergesagte Windrichtung aufweist, und beide Größen in das Anlagenortsmodell (M1) eingegeben werden, wobei
- die vorhergesagte Windgeschwindigkeit und die vorhergesagte Windrichtung insbesondere als Windgeschwindigkeitsverlauf bzw. Windrichtungsverlauf über die Zeit in das Anlagenortsmodell (M1) eingegeben werden.

5. Verfahren nach einem der vorstehenden Ansprüche, **dadurch gekennzeichnet, dass**
- das Anlagenortsmodell (M1) eine Topologie des Aufstellungsortes nachbildet und/oder
- das Anlagenortsmodell (M1) ortsspezifische Wetterabweichungen des Aufstellungsortes nachbildet, insbesondere windrichtungsabhängige und/oder windgeschwindigkeitsabhängige Abweichungen zwischen einer über den Aufstellungsort hinaus erstellten Wettervorhersage und einer an den Aufstellungsort angepassten Wettervorhersage.

6. Verfahren nach einem der vorstehenden Ansprüche, **dadurch gekennzeichnet, dass**
- das Anlagenortsmodell (M1) Leistungsverläufe der Windenergieanlage (100) abhängig von Zuständen der Windenergieanlage (100) antizipiert und insbesondere
- in Abhängigkeit wenigstens eines von der Windenergieanlage (100) erhaltenen Ist-Zustands antizipiert.

7. Verfahren nach einem der vorstehenden Ansprüche, **dadurch gekennzeichnet, dass**
- das Anlagenortsmodell (M1) zeitlich vorbestimmte Leistungsreduzierungen der Windenergieanlage (100) berücksichtigt, insbesondere wenigstens eine Leistungsreduzierung ausgelöst durch einen zeitlich vorbestimmten Reduzierungsvorgang aus der Liste aufweisend:
- eine Schallschutzregelung zum Reduzieren einer Schallimmission,
- eine Schattenwurfregelung zum Reduzieren oder Verhindern eines zyklischen Schattenwurfs, und
- eine Leistungsreduzierung auf null zum Ermöglichen einer Anlagenwartung auf Grund eines vorbestimmten Wartungsplans, und/oder
- das Anlagenortsmodell (M1) von vorbestimmten Randbedingungen abhängige Leistungsreduzierungen der Windenergieanlage (100) berücksichtigt, insbesondere wenigstens eine Leistungsreduzierung ausgelöst durch einen von vorbestimmten Randbedingungen abhängigen Reduzierungsvorgang aus der Liste aufweisend:
- eine Leistungsreduzierung auf Grund einer zu erwartenden Fledermausaktivität,
- eine Leistungsreduzierung auf Grund einer durchzuführenden Wartung der Windenergieanlage (100),
- eine Leistungsreduzierung auf Grund einer Vorgabe eines Einspeisemanagements, und
- eine Leistungsreduzierung auf Grund einer netzspannungsabhängigen und/oder netzfrequenzabhängigen Reduzierungsvorschrift,
- eine Leistungsreduzierung auf Grund eines in Abhängigkeit von Umgebungsbedingungen, insbesondere Temperatur, Luftfeuchtigkeit und Windgeschwindigkeit zu erwartenden Eisansatzes,
- eine in der Windenergieanlage (100) implementierte windgeschwindigkeitsabhängige Sturmregelung, bei der die Abgabeleistung mit zunehmender Windgeschwindigkeit ab einer Sturmanfangswindgeschwindigkeit kontinuierlich reduziert wird, und/oder
- das Anlagenortsmodell (M1) ortsabhängige Wetterphänomene berücksichtigt, insbesondere wenigstens ein Wetterphänomen ausgewählt aus der Liste:
- eine sonnenstrahlungsabhängige Böenhäufigkeit, und
- nachts und/oder morgens auftretende hohe Windgeschwindigkeiten auf Höhe wenigstens eines aerodynamischen Rotors der Windenergieanlagen,
und/oder
- das Anlagenortsmodell (M1) nicht zu erwartende, außerordentliche Leistungsreduzierungen der Windenergieanlage (100) berücksichtigt, die dem Anlagenortsmodell (M1) als außerordentliche Leistungsreduzierungen mitgeteilt werden, insbesondere wenigstens eine Leistungsreduzierung ausgelöst durch einen außerordentlichen Reduzierungsvorgang aus der Liste aufweisend:
- eine Leistungsreduzierung auf null auf Grund einer technischen Störung der Windenergieanlage (100),
- eine Leistungsreduzierung auf Grund eines von extern vorgegebenen Befehls.

8. Verfahren nach einem der vorstehenden Ansprüche, **dadurch gekennzeichnet, dass**
- das Anlagenortsmodell (M1) Leistungsverluste auf Leitungen von der Windenergieanlage (100) zu einem Netzanschlusspunkt (118), besonders Parkverluste in einem Parknetz, berücksichtigt, und/oder
- das Anlagenortsmodell (M1) mit Anfangseinstellungen bereitgestellt wird und im laufenden Betrieb adaptiert wird, indem jeweils
- ein durch das Anlagenortsmodell (M1) nachgebildetes Verhalten der Windenergieanlage (100) mit
- einem tatsächlichen Verhalten der Windenergieanlage (100) verglichen wird und
- abhängig dieses Vergleichs das Anlagenortsmodell (M1) angepasst wird, wobei insbesondere
- eine als Erwartungsleistung ausgegebene zu erwartende einspeisbare Abgabeleistung der Windenergieanlage (100) mit einer
- tatsächlich von der Windenergieanlage (100) abgegebenen eingespeisten Abgabeleistung verglichen wird.

9. Verfahren nach einem der vorstehenden Ansprüche, **dadurch gekennzeichnet, dass**
- das Anlagenortsmodell (M1) an einem anderen Ort als die Windenergieanlage (100) betrieben wird, und,
- wenn die Windenergieanlage (100) in einem Windpark (112) betrieben wird, das Anlagenortsmodell (M1) an einem anderen Ort als der Windpark (112) betrieben wird, insbesondere, dass
- das Anlagenortsmodell (M1) in einer Steuerzentrale (200) eines Netzbetreibers des elektrischen Versorgungsnetzes betrieben wird, und/oder
- eine Kommunikationsverbindung zwischen der Windenergieanlage (100) und/oder dem Windpark (112) einerseits und dem Anlagenortsmodell (M1), insbesondere der Steuerzentrale (200) andererseits vorgesehen ist, und Informationen der Windenergieanlage (100) bzw. des Windparks über die Kommunikationsverbindung von der Windenergieanlage (100) bzw. dem Windpark (112) übertragen werden, insbesondere Informationen über Abschaltprognosen und lokale Wetterbedingungen an der Windenergieanlage (100) bzw. dem Windpark (112).

10. Verfahren nach einem der vorstehenden Ansprüche, **dadurch gekennzeichnet, dass**
- die Windenergieanlage (100) in einem Windpark (112) mit mehreren Windenergieanlagen betrieben wird und
- das Anlagenortsmodell (M1) eine gegenseitige oder einseitige Beeinflussung wenigstens zweier Windenergieanlagen des Windparks berücksichtigt, wobei
- das Anlagenortsmodell (M1) insbesondere
- eine windrichtungsabhängige Beeinflussung der Windenergieanlage (100) als erste Windenergieanlage (100) durch eine zweite Windenergieanlage (100) berücksichtigt, und/oder
- eine windrichtungsabhängige Vorschrift zur Leistungsreduzierung der ersten Windenergieanlage (100) gegenüber der zweiten Windenergieanlage (100) oder gegenüber einer noch weiteren Windenergieanlage (100) berücksichtigt.

11. Verfahren nach einem der vorstehenden Ansprüche, **dadurch gekennzeichnet, dass** das Anlagenortsmodell (M1) eine Kopie einer Steuerung von wenigstens einer Windenergieanlage (100), deren Verhalten es nachbildet, umfasst.

12. Erstellungsvorrichtung (210) zum Erstellen einer Leistungsprognose über zu erwartende durch Windenergieanlagen in ein elektrisches Versorgungsnetz (120) einspeisbare Leistung, umfassend wenigstens
- ein Anlagenortsmodell (M1) zum Erstellen der Leistungsprognose, wobei
- das Anlagenortsmodell (M1) dazu ausgebildet ist, ein Verhalten wenigstens einer der Windenergieanlagen eines Aufstellungsortes nachzubilden,
- eine Eingabeschnittstelle zum Eingeben wenigstens einer Wettervorhersage, wobei das Anlagenortsmodell (M1) dazu vorbereitet ist, in Abhängigkeit der wenigstens einen Wettervorhersage eine zu erwartende einspeisbare Abgabeleistung der Windenergieanlage (100) als Erwartungsleistung zu bestimmen, und
- eine Ausgabeschnittstelle, zum Ausgeben der Erwartungsleistung, wobei
- das Anlagenortsmodell (M1) dazu vorbereitet ist,
- Eigenschaften der Windenergieanlage (100) und
- Eigenschaften des Aufstellungsortes
zu berücksichtigen, und dass
- für mehrere Windenergieanlagen, insbesondere für einen Windpark (112) mit mehreren Windenergieanlagen, oder für mehrere Windparks
- mehrere Anlagenortsmodelle (M1, M2, M3) zur Verwendung vorgesehen sind und in der Erstellungsvorrichtung (210) zusammengefasst sind, um eine Gesamtprognose für die mehreren Windenergieanlagen bzw. mehreren Windparks zu erstellen, und
- jedes der Anlagenortsmodelle (M1, M2, M3) konfiguriert ist, eine Erwartungsleistung (*P̂*1, *P̂*2 *P̂*3) auszugeben, und
- die Erstellungsvorrichtung (210) konfiguriert ist, die Erwartungsleistungen (*P̂*1*, P̂*2*, P̂*3) aller Anlagenortsmodelle (M1, M2, M3) zusammenzuaddieren, um eine Gesamterwartungsleistung (*P̂*) für die mehreren Windenergieanlagen zu erhalten, wobei
- die Erstellungsvorrichtung (210) konfiguriert ist, fürdie Gesamterwartungsleistung (*P̂*) eine statistische gesamte Genauigkeitsabschätzung vorzunehmen und
- die Anlagenortsmodelle (M1, M2, M3) konfiguriert sind, jeweils einzelne Genauigkeitsabschätzungen vorzunehmen, wobei die gesamte Genauigkeitsabschätzung aus den einzelnen Genauigkeitsabschätzungen berechnet wird.

13. Erstellungsvorrichtung (210) nach Anspruch 12, **dadurch gekennzeichnet, dass** die
- Erstellungsvorrichtung (210), insbesondere das Anlagenortsmodell (M1), dazu vorbereitet ist, ein Verfahren nach einem der Ansprüche 1 bis 11 auszuführen

14. Erstellungsvorrichtung (210) nach Anspruch 12 oder 13, **dadurch gekennzeichnet, dass**
- die Erstellungsvorrichtung (210) eine Kommunikationseinrichtung, oder einen Teil davon, umfasst, um zwischen der Windenergieanlage (100) und/oder einem Windpark (112) einerseits und dem Anlagenortsmodell (M1) andererseits Informationen der Windenergieanlage (100) bzw. des Windparks über die Kommunikationsverbindung von der Windenergieanlage (100) bzw. dem Windpark (112) zu übertragen, insbesondere Informationen über Abschaltprognosen und lokale Wetterbedingungen an der Windenergieanlage (100) bzw. dem Windpark (112), und/oder
- das Anlagenortsmodel eine Kopie einer Steuerung der wenigstens einen Windenergieanlage (100), deren Verhalten es nachbildet, umfasst.

15. Steuerzentrale (200) zum Steuern eines elektrischen Versorgungsnetzes, mit einer Erstellungsvorrichtung (210) nach einem der Ansprüche 12 bis 14.

## Claims

1. Method for creating a power forecast of expected feed-in power (P) of wind turbines to be fed into an electrical supply network (120) whereby
- at least one plant location model (M1) is used to create the power forecast, and
- the plant location model (M1) simulates the behaviour of at least one of the wind turbines of a site, whereby
- the plant location model (M1), depending on at least one weather forecast, determines an output power of the wind turbine (100) that can be expected to be fed-in and outputs it as an expected power, and
- the plant location model (M1) takes into account
- characteristics of the wind turbine (100) and
- characteristics of the site
and wherein
- for several wind turbines, in particular for a wind farm (112) with several wind turbines, or for several wind farms
- several plant location models (M1, M2, M3) are used, and combined in the creation device (210) in order to provide an overall forecast for the several wind turbines or wind farms, and
- each of the plant location models (M1, M2, M3) outputs an expected power (*P̂*1, *P̂*2, *P̂*3) , and
- the expected power (*P̂*1, *P̂*2*, P̂*3) of all plant location models (M1, M2, M3) can be added together to achieve an overall expected power (*P̂*) for the several wind turbines, wherein
- for the overall expected power (*P̂*) an overall statistical accuracy estimate is made, and
- the plant location models (M1, M2, M3) each perform individual accuracy estimates and the total accuracy estimate is calculated from the individual accuracy estimates.

2. Method according to claim 1, **characterized in that**
- the expected power is output as a temporal expectation power curve,
- in particular over a predetermined forecast period ranging from 3 hours to 10 days, in particular in the range of one day to 5 days, where the forecast period can start in the present and wherein
- the temporal expectation power curve is preferably updated within pre-determinable update intervals.

3. Method according to claim 1 or 2, **characterized in that**
the plant location model (M1) takes into account at least one boundary condition having from the list:
- a time of day, and
- a season.

4. Method according to any of the preceding claims, **characterized in that**
- the weather forecast has at least one predicted wind speed and one predicted wind direction, and both quantities are entered into the plant location model (M1), whereby
- the predicted wind speed and the predicted wind direction can be entered into the plant location model (M1) in particular as wind speed curves or wind direction curves over time.

5. Method according to any of the preceding claims, **characterized in that**
- the plant location model (M1) simulates a topology of the site, and/or
- the plant location model (M1) simulates site-specific weather deviations of the site, in particular wind direction-dependent and/or wind speed-dependent deviations between a weather forecast created beyond the site and a weather forecast adapted to the site.

6. Method according to any of the preceding claims, **characterized in that**
- the plant location model (M1) anticipates the performance curves of the wind turbine (100) depending on the conditions of the wind turbine (100) and, in particular,
- depending on at least one actual state obtained by the wind turbine (100).

7. Method according to any of the preceding claims, **characterized in that**
- the plant location model (M1) takes into account time-predetermined power reductions of the wind turbine (100), in particular having at least one power reduction triggered by a time-predetermined reduction process from the list:
- a sound protection control system to reduce noise immission,
- a shadow casting control to reduce or prevent cyclic shadow casting, and
- a reduction in power to zero to enable plant maintenance based on a predetermined maintenance plan, and/or
- the plant location model (M1) takes into account power reductions of the wind turbine (100) dependent on predetermined boundary conditions, in particular having at least one power reduction triggered by a reduction process dependent on predetermined boundary conditions from the list:
- a reduction in power due to expected bat activity,
- a reduction in power due to maintenance of the wind turbine (100) to be performed,
- a reduction in power due to a feed-in management requirement, and
- a reduction in power due to a mains voltage-dependent and/or mains frequency-dependent reduction regulation,
- a reduction in power due to an expected ice build-up depending on environmental conditions, in particular temperature, humidity and wind speed,
- a wind speed-dependent storm control system implemented in the wind turbine (100), in which the output power is continuously reduced with increasing wind speed from an initial storm wind speed, and/or
- the plant location model (M1) takes into account location-dependent weather phenomena, in particular at least one weather phenomenon selected from the list:
- a solar radiation-dependent gust frequency, and
- high wind speeds occurring at night and/or in the morning at the height of at least one aerodynamic rotor of the wind turbines,
and/or
- the plant location model (M1) takes into account extraordinary power reductions of the wind turbine (100) that are not to be expected, which are communicated to the plant location model (M1) as extraordinary power reductions, in particular having at least one power reduction triggered by an extraordinary reduction process from the list:
- a reduction in power to zero due to a technical malfunction of the wind turbine (100),
- a reduction in power due to an external command.

8. Method according to any of the preceding claims, **characterized in that**
- the plant location model (M1) takes into account power losses on lines from the wind turbine (100) to a grid connection point (118), especially parking losses in a parking network, and/or
- the plant location model (M1) is provided with initial settings and is adapted during operation by
- a behaviour of the wind turbine (100) simulated by the plant location model is compared (M1) with
- the actual behaviour of the wind turbine (100) and
- depending on this comparison, the plant location model (M1) will be adapted, wherein in particular
- an expected power outputted as an expected power output of the wind turbine that can be fed-in
- is compared with a power output actually supplied by the wind turbine (100).

9. Method according to any of the preceding claims, **characterized in that**
- the plant location model (M1) is operated at a different location than the wind turbine (100), and,
- if the wind turbine (100) is operated in a wind farm (112), the plant location model (M1) is operated at a different location than the wind farm (112), in particular that
- the plant location model (M1) is operated in a control centre (200) of a network operator of the electrical supply network, and/or
- a communication link is provided between the wind turbine (100) and/or the wind farm (112) on the one hand and the plant location model (M1), in particular the control centre (200) on the other, and information from the wind turbine (100) or the wind farm are transmitted via the communication link from the wind turbine (100) or the wind farm (112), in particular information on shutdown forecasts and local weather conditions at the wind turbine (100) or the wind farm (112).

10. Method according to any of the preceding claims, **characterized in that**
- the wind turbine (100) is operated in a wind farm (112) with several wind turbines, and
- the plant location model (M1) takes into account a mutual or one-sided influence of at least two wind turbines of the wind farm, whereby
- the plant location model (M1) in particular
- takes into account a wind direction-dependent influence of the wind turbine (100) as the first wind turbine (100) by a second wind turbine (100), and/or
- takes into account a wind direction-dependent regulation to reduce the power of the first wind turbine (100) compared to the second wind turbine (100) or to another wind turbine (100).

11. Method according to any of the preceding claims, **characterized in that** the plant location model (M1) comprises a copy of a control system of at least one wind turbine (100), the behavior of which it reproduces.

12. Creation device (210) for creating a power forecast of expected power to be fed-in by wind turbines into an electrical supply network (120), including at least
- a plant location model (M1) for creating the power forecast, where
- the plant location model (M1) is designed to simulate the behaviour of at least one of the wind turbines at a site,
- an input interface for entering at least one weather forecast, whereby the plant location model (M1) is prepared to do so, depending on the at least one weather forecast to determine an expected feed-in output power of the wind turbine (100) as the expected output, and
- an output interface, for the output of the expected output, where
- the plant location model (M1) is prepared to take into account
- characteristics of the wind turbine (100) and
- characteristics of the site
and that
- for several wind turbines, in particular for a wind farm (112) with several wind turbines, or for several wind farms
- several plant location models (M1, M2, M3) are intended for use and are combined in the creation device (210) in order to provide an overall forecast for the several wind turbines or wind farms, and
- each of the plant location models (M1, M2, M3) is configured to output an expected power (*P̂*1, *P̂*2, *P̂*3), and
- the creation device (210) is configured, to add together the expected power (*P̂*1, *P̂*2, *P̂*3) of all plant location models (M1, M2, M3) in order to achieve an overall expected power (*P̂*) for the several wind turbines, wherein
- the creation device (210) is configured to make an overall statistical accuracy estimation for the overall expected power (*P̂*), and
- the plant location models (M1, M2, M3) are configured to perform individual accuracy estimates at a time, with the total accuracy estimate being calculated from each accuracy estimate.

13. Creation device (210) according to claim 12, **characterized in that** the
- creation device (210), in particular the plant location model (M1), is prepared to carry out a method according to one of claims 1 to 11.

14. Creation device (210) according to claim 12 or 13, **characterized in that**:
- the creation device (210) comprises a communication device, or part thereof, in order to transmit information related to the wind turbine (100) and/or the wind farm between the wind turbine (100) and/or a wind farm (112) on the one hand and the plant location model (M1) on the other hand via the communication link from the wind turbine (100) or the wind farm (112), in particular in order to transmit information on shutdown forecasts and local weather conditions at the wind turbine (100) or the wind farm (112), and/or
- the plant location model includes a copy of a control system of at least one wind turbine (100) whose behaviour it simulates.

15. Control unit (200) for controlling an electrical supply network, with a creation device (210) according to any of claims 12 to 14.

## Revendications

1. Procédé d'établissement d'une prévision de puissance sur une puissance (P) escomptée pouvant être injectée dans un réseau d'alimentation électrique (120) par des éoliennes, dans lequel
- au moins un modèle de site d'installation (M1) est utilisé pour établir la prévision de puissance, et
- le modèle de site d'installation (M1) reproduit un comportement d'au moins une des éoliennes d'un site d'implantation, dans lequel
- - le modèle de site d'installation (M1) définit, en fonction d'au moins une prévision météorologique, une puissance de sortie escomptée pouvant être injectée de l'éolienne (100) et l'envoie en tant que puissance escomptée, et
- - le modèle de site d'installation (M1) tient compte
- - - de propriétés de l'éolienne (100) et
- - - de propriétés du site d'implantation, et dans lequel
- pour plusieurs éoliennes, en particulier pour un parc éolien (112) avec plusieurs éoliennes, ou pour plusieurs parcs éoliens,
- - plusieurs modèles de site d'installation (M1, M2, M3) sont utilisés et sont regroupés dans le dispositif d'établissement (210) pour établir une prévision globale pour les plusieurs éoliennes ou plusieurs parcs éoliens, et
- - chacun des modèles de site d'installation (M1, M2, M3) envoie une puissance escomptée (P^1, P^2, P^3), et
- - les puissances escomptées (P^1, P^2, P^3) de tous les modèles de site d'installation (M1, M2, M3) sont additionnées pour obtenir une puissance escomptée globale (P^) pour les plusieurs éoliennes, dans lequel
- - une estimation de précision globale statistique est effectuée pour la puissance escomptée globale (P^) et
- - les modèles de site d'installation (M1, M2, M3) effectuent respectivement des estimations de précision individuelles et l'estimation de précision globale est calculée à partir des estimations de précision individuelles.

2. Procédé selon la revendication 1, **caractérisé en ce que**
- la puissance escomptée est envoyée en tant qu'évolution de puissance escomptée dans le temps,
- en particulier sur une période de temps de prédiction prédéfinie, qui se situe dans la plage de 3 heures à 10 journées, en particulier dans la plage d'une journée à 5 journées, dans lequel la période de temps de prévision peut commencer dans le temps présent et dans lequel
- l'évolution de puissance escomptée dans le temps est mise à jour de préférence dans des intervalles de mise à jour pouvant être prédéfinis.

3. Procédé selon la revendication 1 ou 2, **caractérisé en ce que**
le modèle de site d'installation (M1) tient compte au moins d'une condition de limite issue de la liste présentant :
- un moment dans la journée, et
- un moment dans l'année.

4. Procédé selon l'une quelconque des revendications précédentes, **caractérisé en ce que**
- la prévision météorologique présente au moins une vitesse du vent prédite et une direction du vent prédite, et les deux grandeurs sont intégrées dans le modèle de site d'installation (M1), dans lequel
- la vitesse du vent prédite et la direction du vent prédite sont intégrées dans le modèle de site d'installation (M1) en particulier en tant qu'évolution de la vitesse du vent ou en tant qu'évolution de la direction du vent dans le temps.

5. Procédé selon l'une quelconque des revendications précédentes, **caractérisé en ce que**
- le modèle de site d'installation (M1) reproduit une topologie du site d'implantation et/ou
- le modèle de site d'installation (M1) reproduit des écarts de météorologie spécifiques au site du site d'implantation, en particulier des écarts selon la direction du vent et/ou selon la vitesse du vent entre une prévision météorologique établie au-delà du site d'implantation et une prévision météorologique adaptée au site d'implantation.

6. Procédé selon l'une quelconque des revendications précédentes, **caractérisé en ce que**
- le modèle de site d'installation (M1) anticipe des évolutions de puissance de l'éolienne (100) en fonction d'états de l'éolienne (100) et en particulier
- les anticipe en fonction d'au moins un état réel reçu de l'éolienne (100).

7. Procédé selon l'une quelconque des revendications précédentes, **caractérisé en ce que**
- le modèle de site d'installation (M1) tient compte de réductions de puissance prédéfinies dans le temps de l'éolienne (100), en particulier d'au moins une réduction de puissance déclenchée par une opération de réduction prédéfinie dans le temps issue de la liste présentant :
- - une régulation d'insonorisation destinée à réduire une émission sonore,
- - une régulation de projection d'ombre destinée à réduire ou empêcher une projection d'ombre cyclique, et
- - une réduction de puissance sur zéro destinée à permettre une maintenance d'installation en raison d'un calendrier de maintenance prédéfini, et/ou
- le modèle de site d'installation (M1) tient compte de réductions de puissance de l'éolienne (100) dépendant de conditions limites prédéfinies, en particulier d'au moins une réduction de puissance déclenchée par une opération de réduction, dépendant de conditions limites prédéfinies, issue de la liste présentant :
- - une réduction de puissance en raison d'une activité escomptée de chauve-souris,
- - une réduction de puissance en raison d'une maintenance de l'éolienne (100) à effectuer,
- - une réduction de puissance en raison d'une spécification d'une gestion d'injection, et
- - une réduction de puissance en raison d'une prescription de réduction dépendant de la tension de réseau et/ou de la fréquence de réseau,
- - une réduction de puissance en raison d'une formation de givre escomptée en fonction de conditions environnantes, en particulier de la température, de l'humidité de l'air et de la vitesse du vent,
- - une régulation de tempête dépendant de la vitesse du vent, implémentée dans l'éolienne (100), lors de laquelle la puissance de sortie est réduite en continu au fur et à mesure que la vitesse du vent augmente à partir d'une vitesse de vent de début de tempête, et/ou
- le modèle de site d'installation (M1) tient compte de phénomènes météorologiques dépendant du site, en particulier d'au moins un phénomène météorologique choisi parmi la liste :
- - fréquence de rafales dépendant du rayonnement solaire, et
- - des vitesses de vent élevées apparaissant la nuit et/ou le matin à hauteur d'au moins un rotor aérodynamique des éoliennes,
et/ou
- le modèle de site d'installation (M1) tient compte de réductions de puissance exceptionnelles escomptées de l'éolienne (100), qui sont communiquées au modèle de site d'installation (M1) en tant que réductions de puissance exceptionnelles, en particulier d'au moins une réduction de puissance déclenchée par une opération de réduction exceptionnelle issue de la liste présentant :
- - une réduction de puissance sur zéro en raison d'une perturbation technique de l'éolienne (100),
- - une réduction de puissance en raison d'une instruction spécifiée en externe.

8. Procédé selon l'une quelconque des revendications précédentes, **caractérisé en ce que**
- le modèle de site d'installation (M1) tient compte de pertes de puissance sur des câbles depuis l'éolienne (100) jusqu'à un point de raccordement au réseau (118), en particulier de pertes du parc dans un parc, et/ou
- le modèle de site d'installation (M1) est mis à disposition avec des réglages initiaux et est adapté lors du fonctionnement en cours **en ce que** respectivement
- - un comportement reproduit par le modèle de site d'installation (M1) de l'éolienne (100)
- - est comparé à un comportement réel de l'éolienne (100) et
- - le modèle de site d'installation (M1) est adapté en fonction de ladite comparaison, dans lequel en particulier
- - une puissance de sortie de l'éolienne (100) escomptée pouvant être injectée, envoyée en tant que puissance escomptée
- - est comparée à une puissance de sortie injectée dans les faits fournie par l'éolienne (100).

9. Procédé selon l'une quelconque des revendications précédentes, **caractérisé en ce que**
- le modèle de site d'installation (M1) fonctionne sur un autre site que celui de l'éolienne (100), et
- lorsque l'éolienne (100) fonctionne dans un parc éolien (112), le modèle de site d'installation (M1) fonctionne sur un site autre que celui du parc éolien (112), en particulier que
- le modèle de site d'installation (M1) fonctionne dans une centrale de commande (200) d'un exploitant de réseau du réseau d'alimentation électrique, et/ou
- une liaison de communication est prévue entre l'éolienne (100) et/ou le parc éolien (112) d'une part et le modèle de site d'installation (M1), en particulier la centrale de commande (200) d'autre part, et des informations de l'éolienne (100) ou du parc éolien sont transmises par l'intermédiaire de la liaison de communication de l'éolienne (100) ou du parc éolien (112), en particulier des informations sur des prévisions d'arrêt et des conditions météorologiques locales sur l'éolienne (100) ou le parc éolien (112).

10. Procédé selon l'une quelconque des revendications précédentes, **caractérisé en ce que**
- l'éolienne (100) fonctionne dans un parc éolien (112) avec plusieurs éoliennes, et
- le modèle de site d'installation (M1) tient compte d'une influence mutuelle ou unilatérale d'au moins deux éoliennes du parc éolien, dans lequel
- le modèle de site d'installation (M1) tient compte en particulier
- - d'une influence dépendant de la direction du vent de l'éolienne (100) en tant que première éolienne (100) par une deuxième éolienne (100), et/ou
- - tient compte d'une prescription dépendant de la direction du vent destinée à réduire la puissance de la première éolienne (100) par rapport à la deuxième éolienne (100) ou par rapport à une autre éolienne (100) encore.

11. Procédé selon l'une quelconque des revendications précédentes, **caractérisé en ce que** le modèle de site d'installation (M1) comprend une copie d'une commande d'au moins une éolienne (100) dont il reproduit le comportement.

12. Dispositif d'établissement (210) destiné à établir une prévision de puissance sur une puissance escomptée pouvant être injectée par des éoliennes dans un réseau d'alimentation électrique (120), comprenant au moins
- un modèle de site d'installation (M1) destiné à établir la prévision de puissance, dans lequel
- - le modèle de site d'installation (M1) est réalisé pour reproduire un comportement d'au moins une des éoliennes d'un site d'implantation,
- une interface d'entrée destinée à entrer au moins une prévision météorologique, dans lequel le modèle de site d'installation (M1) est préparé pour définir, en fonction de l'au moins une prévision météorologique, une puissance de sortie escomptée pouvant être injectée de l'éolienne (100) en tant que puissance escomptée, et
- une interface d'envoi destinée à envoyer la puissance escomptée, dans lequel
- - le modèle de site d'installation (M1) est préparé pour tenir compte
- - - de propriétés de l'éolienne (100) et
- - - de propriétés du site d'implantation, et que
- pour plusieurs éoliennes, en particulier pour un parc éolien (112) avec plusieurs éoliennes, ou pour plusieurs parcs éoliens,
- - plusieurs modèles de site d'installation (M1, M2, M3) sont prévus pour être utilisés et sont regroupés dans le dispositif d'établissement (210) pour établir une prévision globale pour les plusieurs éoliennes ou plusieurs parcs éoliens, et
- chacun des modèles de site d'installation (M1, M2, M3) est configuré pour envoyer une puissance escomptée (P^1, P^2, P^3) et
- le dispositif d'établissement (210) est configuré pour additionner les puissances escomptées (P^1, P^2, P^3) de tous les modèles de site d'installation (M1, M2, M3) pour obtenir une puissance escomptée globale (P^) pour les plusieurs éoliennes, dans lequel
- le dispositif d'établissement (210) est configuré pour effectuer une estimation de précision globale statistique pour la puissance escomptée globale (P^) et
- les modèles de site d'installation (M1, M2, M3) sont configurés pour effectuer respectivement des estimations de précision individuelles, dans lequel l'estimation de précision globale est calculée à partir des estimations de précision individuelles.

13. Dispositif d'établissement (210) selon la revendication 12, **caractérisé en ce que**
- le dispositif d'établissement (210), en particulier le modèle de site d'installation (M1), est préparé pour exécuter un procédé selon l'une quelconque des revendications 1 à 11.

14. Dispositif d'établissement (210) selon la revendication 12 ou 13, **caractérisé en ce que**
- le dispositif d'établissement (210) comprend un système de communication ou une partie de celui-ci pour transmettre, entre l'éolienne (100) et/ou un parc éolien (112) d'une part et le modèle de site d'installation (M1) d'autre part, des informations de l'éolienne (100) ou du parc éolien par l'intermédiaire de la liaison de communication de l'éolienne (100) ou du parc éolien (112), en particulier des informations sur des prévisions d'arrêt et des conditions météorologiques locales sur l'éolienne (100) ou le parc éolien (112), et/ou
- le modèle de site d'installation comprend une copie d'une commande de l'au moins une éolienne (100) dont il reproduit le comportement.

15. Centrale de commande (200) destinée à commander un réseau d'alimentation électrique, avec un dispositif d'établissement (210) selon l'une quelconque des revendications 12 à 14.
